# EUROPEAN PATENT APPLICATION

(11) **EP 4 753 244 A1**
(43) Date of publication of application: **03.06.2026**
(21) Application number: 25824545.5
(22) Date of filing: 29.03.2025
(51) Int. Cl.: H04M 1/02

(54) **ELECTRONIC DEVICE**

(30) Priority: 24.06.2024 CN 202410823051
(71) Applicant: HUAWEI TECHNOLOGIES CO., LTD., Shenzhen 518129 (CN)
(72) Inventor: HUANG, Zhen, Shenzhen, Guangdong 518129 (CN); LI, Shizhe, Shenzhen, Guangdong 518129 (CN); GUO, Li, Shenzhen, Guangdong 518129 (CN)
(74) Representative: Thun, Clemens
(86) International application number: PCT/CN2025/086050
(87) International publication number: WO 2026/001152

(57) **Abstract**

This application provides an electronic device. The electronic device includes a first screen, a middle frame, a rear cover assembly, and a speaker. The first screen and the rear cover assembly are mounted on two opposite sides of the middle frame. The speaker is located between the first screen and the rear cover assembly, the speaker is mounted on the middle frame, and the speaker and the rear cover assembly enclose a front cavity. The electronic device is provided with a sound outlet, and the sound outlet communicates with the front cavity. The sound outlet is disposed on the rear cover assembly, or the rear cover assembly and the middle frame enclose the sound outlet. In this application, the sound outlet is disposed on the rear cover assembly, or the rear cover assembly and the middle frame enclose the sound outlet, to implement sound output on a rear side of the electronic device, thereby optimizing a sound output manner of the electronic device.

## Description

This application claims priority to Chinese Patent Application No. 202410823051.8, filed with the China National Intellectual Property Administration on June 24, 2024 and entitled "ELECTRONIC DEVICE", which is incorporated herein by reference in its entirety.

### TECHNICAL FIELD

This application relates to the field of audio technologies, and specifically, to an electronic device.

### BACKGROUND

With development of electronic devices having audio functions such as mobile phones, audio use scenarios are increasingly diversified. However, a conventional sound output solution of an electronic device cannot meet a scenario requirement, affecting sound output effect.

### SUMMARY

This application provides an electronic device. The electronic device includes a first screen, a middle frame, a rear cover assembly, and a speaker. The first screen and the rear cover assembly are mounted on two opposite sides of the middle frame, and the speaker is mounted on the middle frame. A sound outlet is disposed on the rear cover assembly, or the rear cover assembly and the middle frame enclose the sound outlet, to implement sound output on a rear side of the electronic device, thereby optimizing a sound output manner of the electronic device.

This application provides an electronic device. The electronic device includes a first screen, a middle frame, a rear cover assembly, and a speaker. The first screen and the rear cover assembly are mounted on two opposite sides of the middle frame. The speaker is located between the first screen and the rear cover assembly, the speaker is mounted on the middle frame, and the speaker and the rear cover assembly enclose a front cavity. The electronic device is provided with a sound outlet, and the sound outlet communicates with the front cavity. The sound outlet is disposed on the rear cover assembly, or the rear cover assembly and the middle frame enclose the sound outlet.

In this application, the sound outlet is disposed on a rear side of the electronic device, so that the speaker can output a sound toward the rear side, an oblique rear side, or a lateral side of the electronic device through the sound outlet, to increase a sound output direction of the electronic device. This helps optimize a sound output manner of the electronic device, and enriches application scenarios of the electronic device. For example, this helps improve effect of picking up a sound by a user from the rear side of the electronic device, so that the sound can still be normally output when a front side of the electronic device is blocked. It should be noted that the rear side of the electronic device is a side that is of the electronic device and that faces away from the first screen.

In some possible implementations, the electronic device further includes a support, the support is located between the speaker and the rear cover assembly, the support is mounted on the middle frame, and the support and the speaker enclose a front cavity. The support is provided with a first through hole, one end of the first through hole communicates with the front cavity, and the other end of the first through hole communicates with the sound outlet.

In this implementation, the support and the speaker enclose the front cavity, so that the enclosing of the front cavity can be decoupled from another mechanical part, and the enclosing of the front cavity does not require the battery cover, to reduce a consistency difference caused by a fluctuation of a mounting tolerance or a deformation fluctuation of the battery cover. In this way, impact of the battery cover on a volume change of the front cavity is avoided, stability of the front cavity is improved, and sound output effect is improved.

In some possible implementations, the middle frame is provided with a mounting groove, and the speaker is accommodated in the mounting groove and is mounted on a groove bottom wall of the mounting groove. The support includes a first portion and a second portion. The first portion of the support is at least partially located in the mounting groove, the first portion of the support is disposed around a periphery of the speaker, and forms the front cavity with the speaker through enclosing, and the first portion of the support is provided with a first through hole. The second portion of the support is connected to a side of the first portion of the support, and the second portion of the support extends outward from the mounting groove and is fastened to the middle frame.

In this implementation, the first portion of the support is disposed around the periphery of the speaker, so that sealing performance of the front cavity enclosed by the support and the speaker can be improved, thereby improving the sound output effect of the speaker. The first portion of the support can be fastened to the middle frame through the second portion of the support, so that the enclosing of the front cavity requires only the support and the speaker, and is decoupled from another structure of the electronic device, to reduce a risk of interference caused by the another structure of the electronic device to the front cavity. This helps improve the sound output effect of the electronic device.

In some possible implementations, the second portion of the support is provided with a first groove, an opening of the first groove faces the rear cover assembly, and the first groove is located between the first through hole and the sound outlet, and communicates the first through hole to the sound outlet.

In this implementation, the first through hole communicates with the front cavity, so that the front cavity can sequentially conduct the first through hole and the first groove.

In some possible implementations, the first groove is provided with a first groove bottom wall, and the first groove bottom wall is a plane.

This implementation helps increase a cross-sectional area of a sound transmission path between the first through hole and the sound outlet, so that a resonance frequency between the first through hole and the sound outlet can be better, to optimize the sound output effect.

In some other possible implementations, the first groove bottom wall is a step surface; in a direction pointing from the first through hole to the first groove, the first groove bottom wall includes a first portion, a second portion, and a third portion that are sequentially connected; and in a thickness direction of the electronic device, the third portion of the first groove bottom wall is closer to the rear cover assembly than the first portion of the first groove bottom wall, and the second portion of the first groove bottom wall is oblique relative to the first portion of the first groove bottom wall.

In this implementation, the first groove bottom wall is designed, so that another internal structure of the electronic device can be avoided, and internal space utilization of the electronic device can be improved. In addition, an airflow guiding function can be implemented, so that a sound transmitted through the first through hole can be better guided to the sound outlet, thereby optimizing the sound output effect.

In some possible implementations, the support further includes a third portion. The third portion of the support and the second portion of the support are connected to different sides of the first portion of the support, and the third portion of the support extends outward from the mounting groove and is fastened to the middle frame.

In this implementation, the first portion of the support can be fastened to the middle frame through the third portion of the support, so that the enclosing of the front cavity requires only the support and the speaker, and is decoupled from another structure of the electronic device, to reduce a risk of interference caused by the another structure of the electronic device to the front cavity. This helps improve the sound output effect of the electronic device. The third portion of the support and the second portion of the support may be connected to different sides of the first portion of the support, so that the third portion of the support and the second portion of the support can jointly fasten the first portion of the support in different directions. Therefore, stability of fastening the support to the middle frame is improved.

The support may further include a fourth portion, and the fourth portion of the support may be located outside the mounting groove and fastened to the middle frame.

In this implementation, the fourth portion of the support can assist in fastening the second portion of the support to the middle frame, to further improve stability of mounting the support on the middle frame.

The support may further include a fifth portion, and the fifth portion of the support may be fastened to the middle frame through a fastener.

In this implementation, the fifth portion of the support is mounted on the middle frame through the fastener, so that stability of a connection between the support and the middle frame can be further improved. In addition, the fastener can provide a pressing force for the support in the thickness direction of the electronic device, to stably press the support on the middle frame. In this way, stability of mounting between the support and the middle frame can be improved, and performance of sealing between the support and the support of the speaker can be improved.

The fifth portion of the support, the third portion of the support, and the second portion of the support may be separately connected to different sides of the first portion of the support, so that the support can be fastened to the support in a plurality of directions, to form a stable trilateral connection structure, thereby improving stability of mounting the support on the middle frame.

The support may further include a sixth portion, and the sixth portion of the support may be mounted in a third fastening groove located on a side wall of the mounting groove.

In this implementation, the sixth portion of the support cooperates with the third fastening groove, so that the sixth portion of the support can be clamped to the middle frame, and the middle frame limits the support in the thickness direction of the electronic device, to improve stability of mounting the support on the middle frame.

The sixth portion of the support and the third portion of the support may be connected to a same side of the first portion of the support, so that the sixth portion of the support can enhance stability of mounting the third portion of the support on the middle frame.

The support may further include a seventh portion, and the seventh portion of the support may be clamped to a side that is of the speaker and that faces away from the third fastening groove.

In this implementation, the seventh portion of the support is clamped to the speaker, so that stability of a connection between the support and the speaker can be improved. This helps improve effect of sealing between the support and the speaker, thereby improving sealing performance of the front cavity.

The seventh portion of the support and the sixth portion of the support may be located on two opposite sides of the first portion of the support, so that the seventh portion of the support limits the speaker through clamping, and the sixth portion of the support and the third portion of the support limit the speaker through the side wall of the mounting groove. In addition, the speaker can be limited in opposite directions, so that stability of fastening the speaker on the middle frame by the support is improved, and a loosening risk of the speaker is reduced.

In some possible implementations, the electronic device further includes a first sealing ring, the first sealing ring is disposed between the speaker and the support, and the first sealing ring is disposed around the periphery of the speaker.

In this implementation, the first sealing ring is disposed, so that effect of sealing between the support and the speaker can be improved, to improve sealing effect of the front cavity, and further improve the sound output effect of the speaker.

The first sealing ring may be in a compressed state, to further improve a degree of fitness between the support and the speaker, so as to improve mounting stability of the support and the speaker, and further improve the sealing effect of the front cavity. This helps improve the sound output effect.

In some possible implementations, the sound outlet is disposed on the rear cover assembly. The rear cover assembly includes a battery cover, the battery cover is mounted on a side that is of the middle frame and that is away from the first screen, and the battery cover is provided with the sound outlet. Alternatively, the rear cover assembly includes a battery cover and a lens decorative part, the battery cover is mounted on a side that is of the middle frame and that is away from the first screen, the lens decorative part is mounted on a side that is of the battery cover and that is away from the first screen, and the battery cover is provided with the sound outlet. Alternatively, the lens decorative part and the battery cover enclose the sound outlet.

In some other possible implementations, the rear cover assembly includes a battery cover, a lens decorative part, and lens glass, the battery cover is mounted on a side that is of the middle frame and that is away from the first screen, the lens decorative part is mounted on a side that is of the battery cover and that is away from the first screen, the lens glass is mounted on a side that is of the lens decorative part and that is away from the first screen, and the battery cover is provided with the sound outlet, or the lens decorative part and the battery cover enclose the sound outlet, or the lens glass and the lens decorative part enclose the sound outlet, or the lens glass is provided with the sound outlet.

In some possible implementations, the rear cover assembly and the middle frame enclose the sound outlet. The rear cover assembly includes a battery cover, the battery cover is mounted on a side that is of the middle frame and that is away from the first screen, and the battery cover and the middle frame enclose the sound outlet.

In some possible implementations, a first notch is disposed at an edge of the battery cover, and an edge of the middle frame encloses the first notch to form the sound outlet. This helps simplify a design of the sound outlet.

In some other possible implementations, a second notch is disposed at an edge of the middle frame, and an edge of the battery cover encloses the second notch to form the sound outlet. This helps simplify a design of the sound outlet.

In some other possible implementations, a first notch is disposed at an edge of the battery cover, a second notch is disposed at an edge of the middle frame, and the first notch communicates with the second notch to form the sound outlet. This helps enrich a design of the sound outlet.

In some possible implementations, the middle frame is provided with a mounting hole, and the mounting hole penetrates the middle frame in the thickness direction of the electronic device. The mounting hole includes a first portion and a second portion, the first portion of the mounting hole is disposed closer to the rear cover assembly than the second portion of the mounting hole, an inner diameter of the first portion of the mounting hole is less than an inner diameter of the second portion of the mounting hole, and a limiting wall facing the first screen is formed at a position where the first portion of the mounting hole communicates with the second portion of the mounting hole. One side of the speaker abuts against the limiting wall, and the other side that is of the speaker and that is opposite abuts against a surface that is of the first screen and that faces the rear cover assembly. The speaker, an inner wall of the first portion of the mounting hole, and the rear cover assembly enclose the front cavity.

In this implementation, the limiting wall and the first screen form mounting limitation on the speaker, to limit the speaker in the thickness direction of the electronic device. This improves stability of mounting the speaker on the middle frame, facilitates stable sound output of the speaker, and improves the sound output effect.

In some possible implementations, the rear cover assembly and the middle frame enclose the sound outlet. The rear cover assembly includes a battery cover, the battery cover is mounted on a side that is of the middle frame and that is away from the first screen, and an edge of the battery cover and an edge of the middle frame enclose the sound outlet. The front cavity includes a first portion and a second portion, and the second portion of the front cavity is located between the first portion of the front cavity and the sound outlet. The battery cover, the speaker, and the inner wall of the first portion of the mounting hole enclose the first portion of the front cavity, and the battery cover and a portion that is of the middle frame and that is located between the sound outlet and the mounting hole enclose the second portion of the front cavity.

In this implementation, the mounting hole of the middle frame is designed, so that a large-size first portion of the front cavity can be enclosed, and the speaker can have better sound output effect. The second portion that is of the front cavity and that is similar to a transmission pipe can be designed by using the design of enclosing the battery cover and the middle frame, to facilitate sound transmission.

In some possible implementations, the electronic device further includes a second sealing ring, and the second sealing ring is mounted between the middle frame and the battery cover. The second sealing ring includes a first portion, a second portion, and a third portion, the first portion of the second sealing ring is of a U-shaped structure, the first portion of the second sealing ring is disposed around a periphery of the mounting hole, an opening of the U-shaped structure of the first portion of the second sealing ring faces the sound outlet, and the second portion of the second sealing ring and the third portion of the second sealing ring are respectively connected to two opposite ends of the first portion of the second sealing ring, and extend in a direction toward the sound outlet to abut against the edge of the battery cover and the edge of the middle frame.

In this implementation, enclosing of the first portion of the second sealing ring can prevent the sound from being propagated in a direction away from the sound outlet after the sound is transmitted through the mounting hole. This helps guide the sound to the sound outlet through enclosing. Enclosing of the second portion and the third portion of the second sealing ring can prevent the sound from being propagated to two sides of the sound outlet along the edge of the battery cover or the edge of the middle frame before the sound is transmitted out of the sound outlet, thereby implementing sealing near the sound outlet. This helps improve the sound output effect of the electronic device.

In some possible implementations, the sound outlet is disposed on the rear cover assembly, and the rear cover assembly includes a battery cover, a lens decorative part, and lens glass, the battery cover is mounted on a side that is of the middle frame and that is away from the first screen, the lens decorative part is mounted on a side that is of the battery cover and that is away from the first screen, and the lens glass is mounted on a side that is of the lens decorative part and that is away from the first screen.

In some possible implementations, the battery cover is provided with a second groove, the second groove is configured to accommodate at least a portion of the lens decorative part, a groove bottom wall of the second groove is provided with a second through hole, and the second through hole communicates with the mounting hole. An edge of the lens decorative part and a side wall of the second groove enclose the sound outlet. The front cavity includes a first portion and a second portion, and the second portion of the front cavity is located between the first portion of the front cavity and the sound outlet. The lens decorative part is spaced from the groove bottom wall of the second groove, the lens decorative part covers the second through hole, the lens decorative part, an inner wall of the second through hole, the inner wall of the first portion of the mounting hole, and the speaker enclose the first portion of the front cavity, and the lens decorative part and a portion that is of the groove bottom wall of the second groove and that is located between the sound outlet and the second through hole enclose the second portion of the front cavity.

In this implementation, the second groove is disposed on the battery cover, to provide mounting space for the lens decorative part, and facilitates enclosing of the front cavity. The mounting hole of the middle frame and the second through hole of the battery cover are designed, so that a large-size first portion of the front cavity can be enclosed, and the speaker can have better sound output effect. The second portion that is of the front cavity and that is similar to a transmission pipe can be designed by using the design of enclosing the battery cover and the lens decorative part, to facilitate sound transmission.

In some possible implementations, the electronic device further includes a third sealing ring, and the third sealing ring is mounted between the groove bottom wall of the second groove and the lens decorative part. The third sealing ring includes a first portion, a second portion, and a third portion, the first portion of the third sealing ring is of a U-shaped structure, the first portion of the third sealing ring is disposed around a periphery of the second through hole, an opening of the U-shaped structure of the first portion of the third sealing ring faces the sound outlet, and the second portion of the third sealing ring and the third portion of the third sealing ring are respectively connected to two opposite ends of the first portion of the third sealing ring, and extend in a direction toward the sound outlet to abut against a side wall of the second groove and an edge of the lens decorative part.

In this implementation, enclosing of the first portion of the third sealing ring can prevent the sound from being propagated in a direction away from the sound outlet after the sound is transmitted through the second through hole. This helps guide the sound to the sound outlet through enclosing. Enclosing of the second portion and the third portion of the third sealing ring can prevent the sound from being propagated to two sides of the sound outlet along an edge of the second groove of the battery cover or the edge of the lens decorative part before the sound is transmitted out of the sound outlet, thereby implementing sealing near the sound outlet. This helps improve the sound output effect of the electronic device.

In some possible implementations, the battery cover is provided with a second through hole, and the second through hole communicates with the mounting hole. The lens decorative part covers the second through hole, the lens decorative part is provided with a third through hole, and the third through hole communicates with the second through hole. An edge of the lens decorative part and an edge of the lens glass enclose the sound outlet. The front cavity includes a first portion and a second portion, and the second portion of the front cavity is located between the first portion of the front cavity and the sound outlet. The lens glass is spaced from the lens decorative part, the lens glass covers the third through hole, the lens glass, an inner wall of the third through hole, an inner wall of the second through hole, the inner wall of the first portion of the mounting hole, and the speaker enclose the first portion of the front cavity, and the lens glass and a portion that is of the lens decorative part and that is located between the sound outlet and the third through hole enclose the second portion of the front cavity.

In this implementation, the mounting hole of the middle frame, the second through hole of the battery cover, and the third through hole of the lens decorative part are designed, so that a large-size first portion of the front cavity can be enclosed, and the speaker can have better sound output effect. The second portion that is of the front cavity and that is similar to a transmission pipe can be designed by using the design of enclosing the lens glass and the lens decorative part, to facilitate sound transmission.

In some possible implementations, the electronic device further includes a fourth sealing ring, and the fourth sealing ring is mounted between the lens decorative part and the lens glass. The fourth sealing ring includes a first portion, a second portion, and a third portion, the first portion of the fourth sealing ring is of a U-shaped structure, the first portion of the fourth sealing ring is disposed around a periphery of the third through hole, an opening of the U-shaped structure of the first portion of the fourth sealing ring faces the sound outlet, and the second portion of the fourth sealing ring and the third portion of the fourth sealing ring are respectively connected to two opposite ends of the first portion of the fourth sealing ring, and extend in a direction toward the sound outlet to abut against the edge of the lens decorative part and the edge of the lens glass.

In this implementation, enclosing of the first portion of the fourth sealing ring can prevent the sound from being propagated in a direction away from the sound outlet after the sound is transmitted through the third through hole. This helps guide the sound to the sound outlet through enclosing. Enclosing of the second portion and the third portion of the fourth sealing ring can prevent the sound from being propagated to two sides of the sound outlet along the edge of the lens decorative part or the edge of the lens glass before the sound is transmitted out of the sound outlet, thereby implementing sealing near the sound outlet. This helps improve the sound output effect of the electronic device.

In some possible implementations, the battery cover is provided with a second through hole, and the second through hole communicates with the mounting hole. The lens decorative part covers the second through hole, the lens decorative part is provided with a third through hole, and the third through hole communicates with the second through hole. The lens glass covers the third through hole, the sound outlet is disposed on the lens glass, and the sound outlet communicates with the third through hole. The lens glass, an inner wall of the third through hole, an inner wall of the second through hole, the inner wall of the first portion of the mounting hole, and the speaker enclose the front cavity.

In this implementation, the lens glass, the lens decorative part, the battery cover, the middle frame, and the speaker may jointly enclose a large-size front cavity. This is conducive to the sound output effect of the speaker. In addition, at least a portion of the sound outlet is disposed directly facing the third through hole. This helps improve the sound output effect of the electronic device.

In some possible implementations, the speaker is provided with a sound output surface, and the sound output surface is disposed facing the rear cover assembly.

In this implementation, the sound output surface of the speaker is disposed facing the rear cover assembly, so that a diaphragm of the speaker can face the rear cover assembly, and the speaker can play an audio in a direction toward the rear cover assembly. In addition, the sound is played to the outside of the electronic device sequentially through the front cavity and the sound outlet. This helps shorten a length of a sound transmission path between the speaker and the sound outlet, thereby improving the sound output effect of the speaker.

In some possible implementations, a ratio of an area of a portion that is of the sound output surface and that is exposed to the front cavity to a total area of the sound output surface is greater than or equal to 3/4.

In this implementation, the sound output surface in the enclosure structure of the front cavity is prevented from being excessively blocked. This helps the speaker better output a sound toward the front cavity through the sound output surface, thereby improving the sound output effect.

In some possible implementations, in the thickness direction of the electronic device, the sound outlet has an orthographic projection on a plane on which the sound output surface is located, and at least a portion of the orthographic projection falls within a circle range with a center of the sound output surface as a circle center and a radius of 30 mm.

In this implementation, relative positions of the sound outlet and the sound output surface are designed, so that a distance between the sound outlet and the sound output surface is not excessively long, to shorten a sound output path. This helps improve the sound output effect.

In some possible implementations, the electronic device further includes a sound output mesh part, the sound output mesh part is mounted on the sound outlet, the sound output mesh part is provided with a plurality of penetrating holes, and the penetrating holes communicate with the front cavity.

In this implementation, air permeability of the sound output mesh part can be improved by using the plurality of penetrating holes, so that the sound can be transmitted through the plurality of penetrating holes.

In some possible implementations, the sound output mesh part includes a first portion and a second portion. The first portion of the sound output mesh part is filled in the sound outlet, and the first portion of the sound output mesh part is provided with a plurality of penetrating holes. The second portion of the sound output mesh part is connected to a periphery of a side that is of the first portion of the sound output mesh part and that is close to the front cavity, and extends in a circumferential direction of the first portion of the sound output mesh part. The second portion of the sound output mesh part is fastened to a surface that is of the rear cover assembly and that is exposed to the front cavity.

In this implementation, stability of mounting the first portion of the sound output mesh part on the sound outlet can be improved by using the second portion of the sound output mesh part, thereby improving stability of sound output at the sound outlet. In addition, because the first portion of the sound output mesh part is provided with the plurality of penetrating holes, airflow uniformity at the first portion of the sound output mesh part can be improved, thereby improving the sound output effect.

In some possible implementations, the sound outlet includes a plurality of portions that are spaced from each other, and the plurality of portions of the sound outlet all communicate with the front cavity.

This implementation helps change a sound output manner of the sound outlet, and enrich the sound output manner of the electronic device, to meet different application scenarios. In addition, the plurality of portions of the sound outlet facilitate a beamforming design, thereby improving the sound output effect of the electronic device.

In some possible implementations, the middle frame is provided with a top side surface and a bottom side surface that are arranged in a length direction, and in the thickness direction of the electronic device, an orthographic projection of the sound outlet on the middle frame falls between the top side surface and the bottom side surface.

In this implementation, the sound outlet is disposed between the top side surface and the bottom side surface, so that a disposing position of the sound outlet is different from a conventional disposing orientation, to increase a sound output orientation of the electronic device, and enrich the sound output manner of the electronic device. This helps the electronic device adapt to more sound output environments.

In some possible implementations, when the speaker operates, a resonance frequency in the front cavity is greater than or equal to 2.5 kHz; and/or a resonance frequency at the sound outlet is greater than or equal to 2.5 kHz, to implement better sound output effect. For example, the resonance frequency in the front cavity 6 may be but is not limited to 2.5 kHz, 2.6 kHz, 2.7 kHz, 2.8 kHz, 2.9 kHz, or another value greater than 2.5 kHz.

In some possible implementations, a sound output area of the sound outlet is greater than or equal to 9 mm². In the thickness direction of the electronic device, a height of the front cavity ranges from 0.5 mm to 1 mm, so that the sound outlet can have a better resonance frequency, to implement better sound output effect. For example, the sound output area of the sound outlet may be but is not limited to 9 mm², 9.1 mm², 9.2 mm², 9.3 mm², 9.4 mm², 9.5 mm², or another value greater than 9 mm².

### BRIEF DESCRIPTION OF DRAWINGS

FIG. 1A is a diagram of a structure of an electronic device in some embodiments according to this application;
FIG. 1B is a diagram of a structure of the electronic device shown in FIG. 1A after the electronic device is cut along a line A-A in some embodiments;
FIG. 2 is a three-dimensional exploded view of the electronic device shown in FIG. 1A in some embodiments;
FIG. 3A is a diagram of a structure of a middle frame in the electronic device shown in FIG. 1A in some implementations;
FIG. 3B is a diagram of a structure of the middle frame shown in FIG. 3A after the middle frame is cut along a line B-B in some embodiments;
FIG. 4 is a diagram of a structure in which a speaker 4 is mounted on the middle frame shown in FIG. 3A in some embodiments;
FIG. 5A is a structural diagram of a partial structure of an electronic device shown in FIG. 4 after the partial structure is cut along a line C-C in some embodiments;
FIG. 5B is a structural diagram of a partial structure of an electronic device shown in FIG. 4 after the partial structure is cut along a line D-D in some embodiments;
FIG. 6A is a diagram of a structure of a support in the electronic device shown in FIG. 1A in some embodiments;
FIG. 6B is a diagram of a structure of the support shown in FIG. 6A from another perspective;
FIG. 7A is a diagram of a structure of the support shown in FIG. 6A after the support is cut along a line E-E in some embodiments;
FIG. 7B is a diagram of a structure of the support shown in FIG. 6A after the support is cut along a line E-E in some other embodiments;
FIG. 8 is a diagram of a structure of a portion that is of an electronic device shown in FIG. 4 and on which the support shown in FIG. 7A is mounted in some embodiments;
FIG. 9A is a diagram of a structure of the portion of the electronic device shown in FIG. 8 after the portion is cut along a line F-F in some embodiments;
FIG. 9B is a diagram of a structure of the portion of the electronic device shown in FIG. 8 after the portion is cut along a line G-G in some embodiments;
FIG. 10A is a diagram of a structure of the portion of the electronic device shown in FIG. 8 after the portion is cut along a line H-H in some embodiments;
FIG. 10B is a diagram of a structure of the portion of the electronic device shown in FIG. 8 after the portion is cut along a line I-I in some embodiments;
FIG. 11 is a diagram of a structure of a sound output mesh part in the electronic device shown in FIG. 1A in some embodiments;
FIG. 12A is a diagram of a structure in which the sound output mesh part shown in FIG. 11 is mounted on a sound outlet in some embodiments;
FIG. 12B is a diagram of a structure of a portion of an electronic device shown in FIG. 12A from another perspective;
FIG. 13 is a diagram of a structure of a portion of an electronic device shown in FIG. 12A after the portion is cut along a line J-J in some embodiments;
FIG. 14 is a diagram of a structure of the electronic device shown in FIG. 1A after the electronic device is cut along a line K-K in some embodiments;
FIG. 15A is a diagram of a structure of an electronic device in some other embodiments according to this application;
FIG. 15B is a diagram of a structure of the electronic device shown in FIG. 15A after the electronic device is cut along a line L-L in some embodiments;
FIG. 16 is an exploded view of a partial structure of the electronic device shown in FIG. 15A in some embodiments;
FIG. 17A is a diagram of a structure of a middle frame in the electronic device shown in FIG. 15A in some embodiments;
FIG. 17B is a diagram of a structure of the middle frame shown in FIG. 17A after the middle frame is cut along a line M-M in some embodiments;
FIG. 18A is a diagram of a structure in which a speaker is mounted on the middle frame shown in FIG. 17A in some embodiments;
FIG. 18B is a diagram of a structure of a portion of an electronic device shown in FIG. 18A after the portion is cut along a line N-N in some embodiments;
FIG. 19 is a diagram of a structure in which a second sealing ring is mounted on a portion of the electronic device shown in FIG. 18A in some embodiments;
FIG. 20A is a diagram of a structure of a sound outlet in the electronic device shown in FIG. 15A in some embodiments;
FIG. 20B is a diagram of a structure of a sound outlet in the electronic device shown in FIG. 15A in some other embodiments;
FIG. 20C is a diagram of a structure of a sound outlet in the electronic device shown in FIG. 15A in some other embodiments;
FIG. 21A is a diagram of a structure of an electronic device in some other embodiments according to this application;
FIG. 21B is a diagram of a structure of the electronic device shown in FIG. 21A after the electronic device is cut along a line O-O in some embodiments;
FIG. 22 is an exploded view of a partial structure of the electronic device shown in FIG. 21A in some embodiments;
FIG. 23 is a diagram of a structure of a battery cover in the electronic device shown in FIG. 21A in some embodiments;
FIG. 24 is a diagram of mounting a third sealing ring in the electronic device shown in FIG. 21A in some embodiments;
FIG. 25 is a diagram of a structure of the electronic device shown in FIG. 21A after the electronic device is cut along a line P-P in some embodiments;
FIG. 26 is a diagram of a structure of a lens decorative part in the electronic device shown in FIG. 21A in some embodiments;
FIG. 27 is a diagram of a structure of an electronic device in some other embodiments according to this application;
FIG. 28 is a diagram of a structure of the electronic device shown in FIG. 27 after the electronic device is cut along a line Q-Q in some embodiments;
FIG. 29 is a diagram of a structure of a lens decorative part in the electronic device shown in FIG. 27 in some implementations;
FIG. 30 is a diagram of mounting a fourth sealing ring in the electronic device shown in FIG. 27 in some embodiments;
FIG. 31 is a diagram of a structure of the electronic device shown in FIG. 27 after the electronic device is cut along a line R-R in some embodiments;
FIG. 32 is a diagram of a structure of an electronic device in some other embodiments according to this application;
FIG. 33 is a diagram of a structure of the electronic device shown in FIG. 32 after the electronic device is cut along a line S-S in some embodiments;
FIG. 34 is a diagram of mounting a fourth sound output sealing ring in the electronic device shown in FIG. 32 in some embodiments;
FIG. 35 is a diagram of a structure of an electronic device in some other embodiments according to this application;
FIG. 36 is a diagram of a structure of the electronic device shown in FIG. 35 in an intermediate state; and
FIG. 37 is a diagram of a structure of the electronic device shown in FIG. 35 in a closed state.

### DESCRIPTION OF EMBODIMENTS

The following describes embodiments of this application with reference to the accompanying drawings in embodiments of this application.

In the descriptions of embodiments of this application, it should be noted that, unless otherwise specified and limited, terms "mounting" and "connection" should be understood in a broad sense. For example, the "connection" may be a detachable connection, a nondetachable connection, a direct connection, or an indirect connection through an intermediate medium. "A plurality of" means at least two.

Orientation terms mentioned in embodiments of this application, for example, "upper", "lower", "inner", "outer", "top", "bottom", and "side" are merely directions based on the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application.

In embodiments of this application, a limitation on a relative position relationship is mentioned, for example, parallel, perpendicular, or aligned. These limitations are all defined based on a current technique level, but are not absolutely strict limitations. A small deviation is allowed, and being approximately parallel, approximately perpendicular, approximately aligned, or the like is allowed. For example, that A is parallel to B means that A is parallel or approximately parallel to B, and an included angle of 0 degrees to 10 degrees between A and B is allowed. For example, that A is perpendicular to B means that A is perpendicular or approximately perpendicular to B, and an included angle of 80 degrees to 100 degrees between A and B is allowed.

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more of the features.

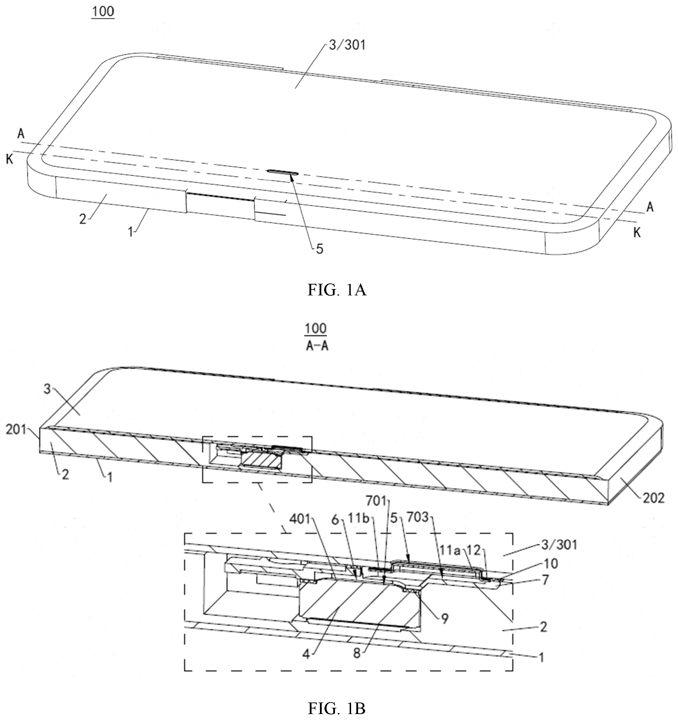

FIG. 1A is a diagram of a structure of an electronic device 100 in some embodiments according to this application.

In some embodiments, the electronic device 100 may be a device having an audio playing function, for example, a foldable terminal device, a bar-type terminal device, a tablet computer, a multimedia player, a headset, a speaker, a notebook computer, a vehicle-mounted device, a television, or a wearable device. In the embodiment shown in FIG. 1A, an example in which the electronic device 100 is a mobile phone is used for description. Certainly, another type of electronic device 100 may alternatively use a similar structure. Details are not described below.

For example, the electronic device 100 may include a first screen 1, a middle frame 2, and a rear cover assembly 3. The first screen 1 and the rear cover assembly 3 may be mounted on two opposite sides of the middle frame 2. The first screen 1, the middle frame 2, and the rear cover assembly 3 may jointly enclose an interior of the electronic device 100. The first screen 1 may be a flexible display or a rigid display. The first screen 1 may be an organic light-emitting diode (organic light-emitting diode, OLED) display, a mini organic light-emitting diode (mini organic light-emitting diode) display, a micro organic light-emitting diode (micro organic light-emitting diode) display, a quantum dot light-emitting diode (quantum dot light-emitting diode, QLED) display, a liquid crystal display (liquid crystal display, LCD), or the like.

For example, the electronic device 100 may further include a lens module (not shown in the figure), and the lens module may be mounted inside the electronic device 100. The lens module may be configured to implement a photographing function. The lens module may be but is not limited to an upright lens, a periscope lens, or the like.

Refer to FIG. 1A and FIG. 1B. FIG. 1B is a diagram of a structure of the electronic device 100 shown in FIG. 1A after the electronic device 100 is cut along a line A-A in some embodiments.

In some embodiments, the electronic device 100 may further include a speaker 4. The speaker 4 may be mounted between the first screen 1 and the rear cover assembly 3. The electronic device 100 may be provided with a sound outlet 5, and the speaker 4 may play a sound to the outside of the electronic device 100 through the sound outlet 5.

For example, a process in which the speaker 4 plays an audio may be as follows: The electronic device 100 decodes an audio file into a digital signal, performs digital-to-analog conversion on the digital signal to restore the digital signal to an analog signal, then amplifies the analog signal, and inputs the analog signal to the speaker 4, so that the speaker 4 plays the audio. After a voice coil of the speaker 4 receives a current signal, the powered-on voice coil vibrates by magnetic force in a magnetic field environment of a magnetic circuit component of the speaker 4, to drive a diaphragm to vibrate, thereby implementing sound output.

The electronic device 100 and the speaker 4 may jointly enclose a front cavity 6, so that the speaker 4 can transmit a sound to the sound outlet 5 through the front cavity 6.

In another embodiment, the electronic device 100 may alternatively include a plurality of speakers 4, and the plurality of speakers 4 may be configured to emit sounds in a plurality of audio tracks, to form stereo.

It should be noted that FIG. 1A and FIG. 1B merely illustrate some components of the electronic device 100, and actual shapes and actual sizes of these components are not limited by FIG. 1A, FIG. 1B, and the following accompanying drawings.

The following describes an enclosure structure of the front cavity 6 and a position setting of the sound outlet 5 with reference to related accompanying drawings.

Still refer to FIG. 1A and FIG. 1B. In some embodiments, the sound outlet 5 may be disposed on the rear cover assembly 3, or the rear cover assembly 3 and the middle frame 2 may enclose the sound outlet 5.

In this embodiment, the sound outlet 5 is disposed on a rear side of the electronic device 100, so that the speaker 4 can output a sound toward the rear side, an oblique rear side, or a lateral side of the electronic device 100 through the sound outlet 5, to increase a sound output direction of the electronic device 100. This helps optimize a sound output manner of the electronic device 100, and enriches application scenarios of the electronic device 100. For example, this helps improve effect of picking up a sound by a user from the rear side of the electronic device 100, so that the sound can still be normally output when a front side of the electronic device 100 is blocked. It should be noted that the rear side of the electronic device 100 is a side that is of the electronic device 100 and that faces away from the first screen.

For example, the middle frame 2 may be provided with a top side surface 201 and a bottom side surface 202 arranged in a length direction, and in a thickness direction of the electronic device 100, an orthographic projection of the sound outlet 5 on the middle frame 2 may fall between the top side surface 201 and the bottom side surface 202.

In this embodiment, the sound outlet 5 is disposed between the top side surface 201 and the bottom side surface 202, so that a disposing position of the sound outlet 5 is different from a conventional disposing orientation, to increase a sound output orientation of the electronic device 100, and enrich the sound output manner of the electronic device 100. This helps the electronic device 100 adapt to more sound output environments.

For example, the speaker 4 may be provided with a sound output surface 401, and the sound output surface 401 may be disposed facing the rear cover assembly 3. The speaker 4 and the rear cover assembly 3 may enclose the front cavity 6, and the sound output surface 401 is exposed to the front cavity 6.

In this embodiment, the sound output surface 401 of the speaker 4 is disposed facing the rear cover assembly 3, so that the diaphragm of the speaker 4 can face the rear cover assembly 3, and the speaker 4 can play an audio in a direction toward the rear cover assembly 3. In addition, the sound is played to the outside of the electronic device 100 sequentially through the front cavity 6 and the sound outlet 5. This helps shorten a length of a sound transmission path between the speaker 4 and the sound outlet 5, thereby improving sound output effect of the speaker 4.

An included angle of any value between 0° and 180° may be formed between an orientation of the sound outlet 5 and the sound output surface 401, provided that the sound outlet 5 can output the sound on the rear side of the electronic device 100.

The rear cover assembly 3 may include a battery cover 301, a lens decorative part (not shown in the figure), and lens glass (not shown in the figure). The battery cover 301 may be mounted on a side that is of the middle frame 2 and that is away from the first screen 1. The lens decorative part may be mounted on a side that is of the battery cover 301 and that is away from the first screen 1, and is disposed corresponding to the lens module. The lens glass may be mounted on a side that is of the lens decorative part 302 and that is away from the first screen 1, and is disposed corresponding to the lens module. It should be noted that the rear cover assembly 3 may alternatively include only the battery cover 301.

The battery cover 301 may be provided with the sound outlet 5, or an edge of the lens decorative part and the battery cover 301 may enclose the sound outlet 5, or an edge of the lens glass and an edge of the lens decorative part may enclose the sound outlet 5, or the lens glass may be provided with the sound outlet 5, or an edge of the battery cover 301 and an edge of the middle frame 2 may enclose the sound outlet 5, or the like.

It should be noted that the sound outlet 5 may be disposed at any position on the rear side of the electronic device 100, provided that the speaker 4 can output the sound on the rear side of the electronic device 100 through the sound outlet 5. That the sound is output from the rear side of the electronic device 100 to a side edge of the electronic device 100 may also be understood as that the sound is output on the rear side of the electronic device 100.

Next, an example in which the sound outlet 5 is disposed on the battery cover 301 is used for detailed description.

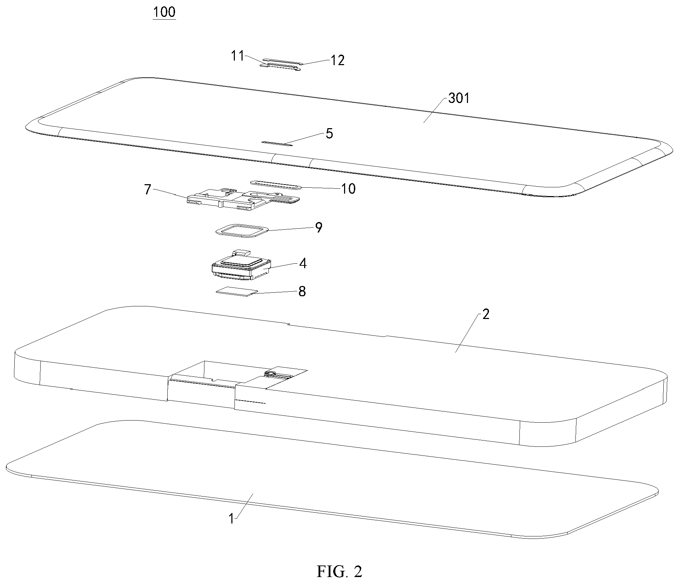

Refer to FIG. 1A and FIG. 2. FIG. 2 is a three-dimensional exploded view of the electronic device 100 shown in FIG. 1A in some embodiments.

In some embodiments, the electronic device 100 may further include a support 7, a first mounting pad 8, a first sealing ring 9, a first sound output sealing ring 10, a sound output mesh part 11, and a second mounting pad 12.

For example, the support 7 may be located between the speaker 4 and the rear cover assembly 3, the support 7 may be mounted on the support 7, and the support 7 and the speaker 4 may enclose the front cavity 6. The support 7 may be provided with a first through hole 701, one end of the first through hole 701 may communicate with the front cavity 6, and the other end of the first through hole 701 may communicate with the sound outlet 5.

In this embodiment, the support 7 and the speaker 4 enclose the front cavity 6, so that the enclosing of the front cavity 6 can be decoupled from another mechanical part, and the enclosing of the front cavity 6 does not require the battery cover 301, to reduce a consistency difference caused by a fluctuation of a mounting tolerance or a deformation fluctuation of the battery cover 301. In this way, impact of the battery cover 301 on a volume change of the front cavity 6 is avoided, stability of the front cavity 6 is improved, and sound output effect is improved.

Specifically, in an assembly process of the electronic device 100, because a structure of the electronic device 100 on the side that is of the middle frame 2 and that is away from the first screen 1 is complex, an assembly chain of the electronic device 100 on the side that is of the middle frame 2 and that is away from the first screen 1 is long. For example, structures such as the lens module, a battery, and a circuit board assembly need to be mounted on the side that is of the middle frame 2 and that is away from the first screen 1. In addition, the battery cover 301 is usually in a last mounting process, to seal the side that is of the middle frame 2 and that is away from the first screen 1. Consequently, a mounting tolerance of the battery cover 301 fluctuates greatly in the assembly process of the electronic device 100. If the battery cover 301 and the speaker 4 directly enclose the front cavity 6, a size of the front cavity 6 easily changes. In addition, the size change is random, and it is difficult to capture a rule for prediction. Consequently, an actual size of the front cavity 6 is different from a theoretical design size. However, a design of the front cavity 6 is very important to the sound output effect of the speaker 4. Consequently, the sound output effect of the speaker 4 is unstable.

In addition, after the electronic device 100 is assembled, if the battery cover 301 and the speaker 4 directly enclose the front cavity 6, due to a large size of the battery cover 301, in a process of using the electronic device 100, the battery cover 301 is prone to deformation due to an external force, causing a size fluctuation. Further, the size of the front cavity 6 is also affected, weakening the sound output effect of the speaker 4.

Therefore, in this embodiment, the support 7 and the support 7 of the speaker 4 enclose the front cavity 6, and the battery cover 301 does not need to participate in the enclosing of the front cavity 6. This avoids impact of an assembly tolerance or a size fluctuation of the battery cover 301, and helps improve size consistency of the front cavity 6. In this way, sound output stability is ensured, and the sound output effect is improved.

For example, the support 7 may be disposed around a periphery of the speaker 4, so that the support 7 is disposed to wrap a portion of the speaker 4. This helps improve sealing performance of the front cavity 6 enclosed by the support 7 and the speaker 4.

For example, the first mounting pad 8 may be mounted between the middle frame 2 and a side that is of the speaker 4 and that faces away from the support 7.

In this embodiment, the first mounting pad 8 is disposed, so that stability of mounting the speaker 4 on the middle frame 2 by the support 7 can be improved, to improve stability of the front cavity 6. This helps improve the sound output effect.

The first mounting pad 8 may be in a compressed state, to improve a degree of fitness between the support 7 and the speaker 4, so as to improve mounting stability of the support 7 and the speaker 4, and improve stability of the front cavity 6. This helps improve the sound output effect.

A material of the first mounting pad 8 may be but is not limited to adhesive, foam, foam adhesive, or the like, or the first mounting pad 8 may be formed by using a dispensing technique.

For example, the first sealing ring 9 may be disposed between the speaker 4 and the support 7, and the first sealing ring 9 may be disposed around a periphery of the sound output surface 401.

In this embodiment, the first sealing ring 9 is disposed, so that effect of sealing between the support 7 and the speaker 4 can be improved, to improve sealing effect of the front cavity 6, and further improve the sound output effect of the speaker 4.

The first sealing ring 9 may be in a compressed state, to further improve the degree of fitness between the support 7 and the speaker 4, so as to improve mounting stability of the support 7 and the speaker 4, and further improve the sealing effect of the front cavity 6. This helps improve the sound output effect.

A material of the first sealing ring 9 may be but is not limited to adhesive, foam, foam adhesive, or the like, or the first sealing ring 9 may be formed by using a dispensing technique.

For example, the sound output mesh part 11 may be mounted on the sound outlet 5, and is configured to prevent dust from entering the sound outlet 5, to prevent external impurities from entering a sound cavity and affecting the sound output effect.

The second mounting pad 12 may be used to mount the sound output mesh part 11 on the battery cover 301, to maintain stable mounting of the sound output mesh part 11.

The second mounting pad 12 may be but is not limited to adhesive or foam adhesive, or may be formed by using a dispensing technique.

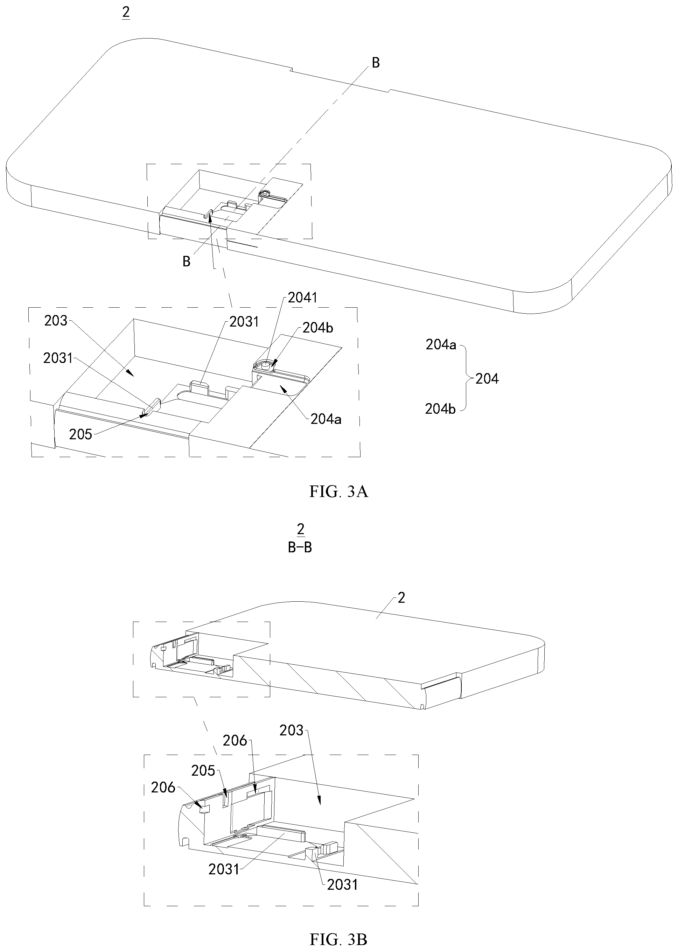

Refer to FIG. 1B, FIG. 3A, and FIG. 3B. FIG. 3A is a diagram of a structure of the middle frame 2 in the electronic device 100 shown in FIG. 1A in some implementations. FIG. 3B is a diagram of a structure of the middle frame 2 shown in FIG. 3A after the middle frame 2 is cut along a line B-B in some embodiments.

In some embodiments, the middle frame 2 may be provided with a mounting groove 203, and an opening of the mounting groove 203 may be disposed facing the battery cover 301.

For example, a limiting structure 2031 may be disposed at a groove bottom of the mounting groove 203.

In some examples, the limiting structure 2031 may be a limiting block, and the limiting block may protrude from the groove bottom of the mounting groove 203. There may be a plurality of limiting blocks. Some limiting blocks are disposed parallel to a first side wall of the mounting groove 203, and some other limiting blocks may be disposed along a second side wall of the mounting groove 203. The first side wall and the second side wall are two adjacent side walls of the mounting groove 203.

In this embodiment, limiting space can be formed between the side wall of the mounting groove 203 and some of the plurality of limiting blocks that are arranged parallel to the first side wall, and a limiting direction is a direction in which the limiting blocks intersect the first side wall. Limiting space can also be formed between the side wall of the mounting groove 203 and some of the plurality of limiting blocks that are arranged parallel to the second side wall, and a limiting direction is a direction in which the limiting blocks intersect the second side wall.

In some other examples, the limiting structure 2031 may be a limiting groove, and the limiting groove may be recessed at the groove bottom of the mounting groove 203, to implement limiting by using an inner side wall of the limiting groove.

It should be noted that the limiting structure 2031 may be provided with both the limiting block and the limiting groove, and limiting is implemented by using both the limiting block and the limiting groove, to implement multi-level limiting.

In some embodiments, the middle frame 2 may be further provided with a first fastening groove 204, and the first fastening groove 204 may be recessed on a surface that is of the middle frame 2 and that faces the battery cover 301. The first fastening groove 204 may be located on a side of the mounting groove 203, and the first fastening groove 204 may communicate with the mounting groove 203.

For example, the first fastening groove 204 may include a first portion 204a and a second portion 204b. The first portion 204a of the first fastening groove 204 may communicate with the mounting groove 203, and the second portion 204b of the first fastening groove 204 may be disposed on a side of the first portion 204a of the first fastening groove 204, and extends toward a side edge of the first portion 204a of the first fastening groove 204.

A limiting pillar 2041 may be disposed on a groove bottom wall of the second portion 204b of the first fastening groove 204, and the limiting pillar 2041 protrudes from the groove bottom wall of the second portion 204b of the first fastening groove 204.

In some embodiments, the middle frame 2 may be further provided with a second fastening groove 205, and the second fastening groove 205 may be recessed on the surface that is of the middle frame 2 and that faces the battery cover 301. The second fastening groove 205 may be located on a side of the mounting groove 203, and the second fastening groove 205 may communicate with the mounting groove 203.

In some examples, the second fastening groove 205 and the first fastening groove 204 may be located on different sides of the mounting groove 203.

In some other examples, the second fastening groove 205 and the first fastening groove 204 may be located on a same side of the mounting groove 203, and the second fastening groove 205 is spaced from the first fastening groove 204.

In some embodiments, the middle frame 2 may be further provided with a third fastening groove 206, and the third fastening groove 206 may be recessed on the side wall of the mounting groove 203.

For example, the third fastening groove 206 and the second fastening groove 205 may be located on a same side of the mounting groove 203, and the third fastening groove 206 may be spaced from the second fastening groove 205.

There may be a plurality of third fastening grooves 206, and the plurality of third fastening grooves 206 may be arranged on two sides of the second fastening groove 205.

In some other implementations, the third fastening groove 206 and the second fastening groove 205 may alternatively be located on different sides of the mounting groove 203.

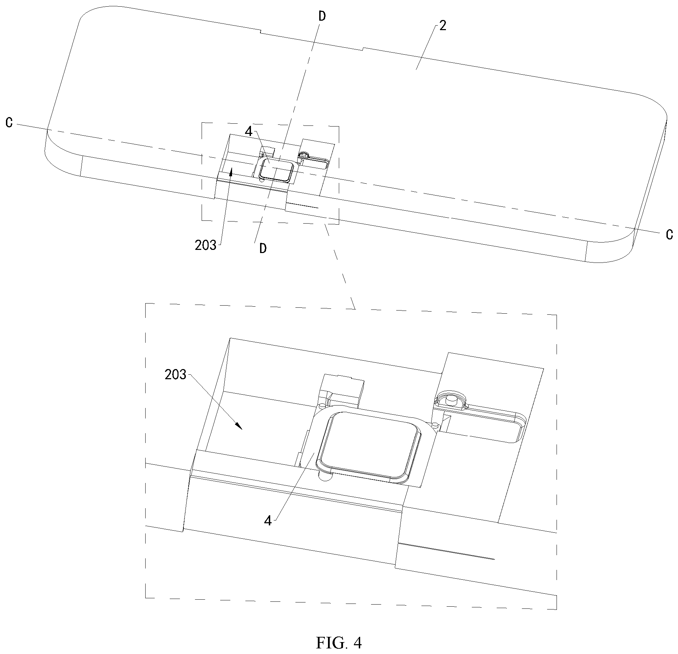

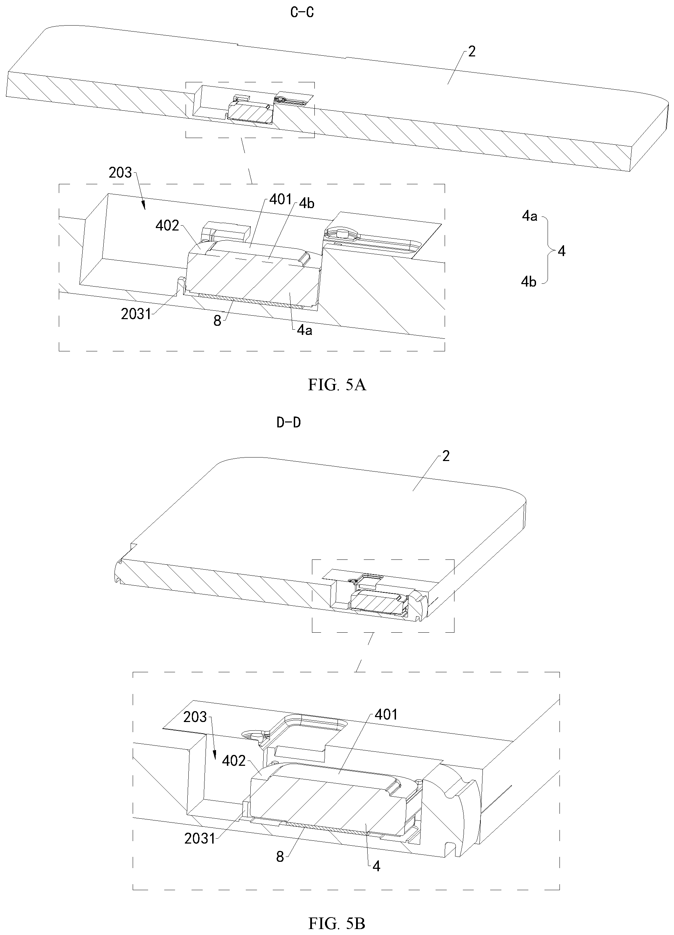

Refer to FIG. 4, FIG. 5A, and FIG. 5B. FIG. 4 is a diagram of a structure in which the speaker 4 is mounted on the middle frame 2 shown in FIG. 3A in some embodiments. FIG. 5A is a structural diagram of a partial structure of the electronic device 100 shown in FIG. 4 after the electronic device 100 is cut along a line C-C in some embodiments. FIG. 5B is a structural diagram of a partial structure of the electronic device 100 shown in FIG. 4 after the electronic device 100 is cut along a line D-D in some embodiments.

In some embodiments, the speaker 4 may be accommodated in the mounting groove 203 and mounted on a groove bottom wall of the mounting groove 203. The sound output surface 401 of the speaker 4 is disposed facing away from the groove bottom wall of the mounting groove 203.

In this embodiment, the speaker 4 is mounted in the mounting groove 203, so that groove space of the mounting groove 203 can be used to reduce additional dimension space occupied by the speaker 4, and a thickness of the middle frame 2 covers at least a portion of a thickness of the speaker 4. This facilitates a light and thin design of the electronic device 100.

For example, the speaker 4 may be mounted corresponding to the limiting structure 2031, and the speaker 4 is limited by the limiting structure 2031, to improve stability of mounting the speaker 4 on the middle frame 2, so as to improve sound output stability of the speaker 4. This helps improve the sound output effect.

In some examples, the limiting structure 2031 may be a limiting block, and the limiting block cooperates with the side wall of the mounting groove 203 to limit the speaker 4. In some other examples, the limiting structure 2031 may be a limiting groove, and the speaker 4 may be limited by a side wall of the limiting groove.

Specifically, an example in which the limiting structure 2031 is a limiting block, the first side wall of the mounting groove 203 is parallel to a length direction of the electronic device 100, and the second side wall of the mounting groove 203 is parallel to a width direction of the electronic device 100 is used for illustration. As shown in FIG. 5A, a limiting block whose arrangement direction is parallel to the second side wall and the side wall of the mounting groove 203 jointly form mounting limitation on the speaker 4, and a limiting direction intersects with the second side wall. As shown in FIG. 5B, a limiting block whose arrangement direction is parallel to the first side wall and the groove wall of the mounting groove 203 jointly form mounting limitation on the speaker 4, and a limiting direction intersects with the first side wall. In this way, the speaker 4 is limited by the limiting blocks, so that the speaker 4 can be limited in the length direction and the width direction of the electronic device 100, to implement stable mounting of the speaker 4.

It should be noted that, in FIG. 5A and FIG. 5B, an example in which the limiting structure 2031 is a limiting block is used for illustration. It may be understood that a specific structure of the limiting structure 2031 is not limited in FIG. 5A and FIG. 5B, provided that the limiting structure 2031 can limit mounting of the speaker 4.

For example, the first mounting pad 8 may be sticky, so that the speaker 4 can be bonded to the groove bottom wall of the mounting groove 203 through the first mounting pad 8, to further improve stability of mounting the speaker 4 on the middle frame 2, and further improve sound output stability of the speaker 4.

In some embodiments, the speaker 4 may include a first portion 4a and a second portion 4b, and the first portion 4a of the speaker 4 may be mounted on the groove bottom wall of the mounting groove 203, the second portion 4b of the speaker 4 is connected to a side that is of the first portion 4a of the speaker 4 and that is away from the groove bottom wall of the mounting groove 203. A surface that is of the second portion 4b of the speaker 4 and that faces away from the groove bottom wall is the sound output surface 401 of the speaker 4.

For example, a circumferential size of the second portion 4b of the speaker 4 may be less than that of the first portion 4a of the speaker 4, so that a surface of a side that is of the first portion 4a of the speaker 4 and that is connected to the second portion 4b of the speaker 4 is greater than that of the second portion 4b of the speaker 4. In this way, a mounting surface 402 surrounding at least a portion of a periphery of the sound output surface 401 is formed, and the mounting surface 402 is located on the surface of the side that is of the first portion 4a of the speaker 4 and that is connected to the second portion 4b of the speaker 4.

The mounting surface 402 may be disposed around the periphery of the sound output surface 401 to form a "loop"-shaped structure, or the mounting surface 402 may be disposed around a portion of the periphery of the sound output surface 401 to form a "U"-shaped structure, a "C"-shaped structure, a "double-line"-shaped structure, or the like.

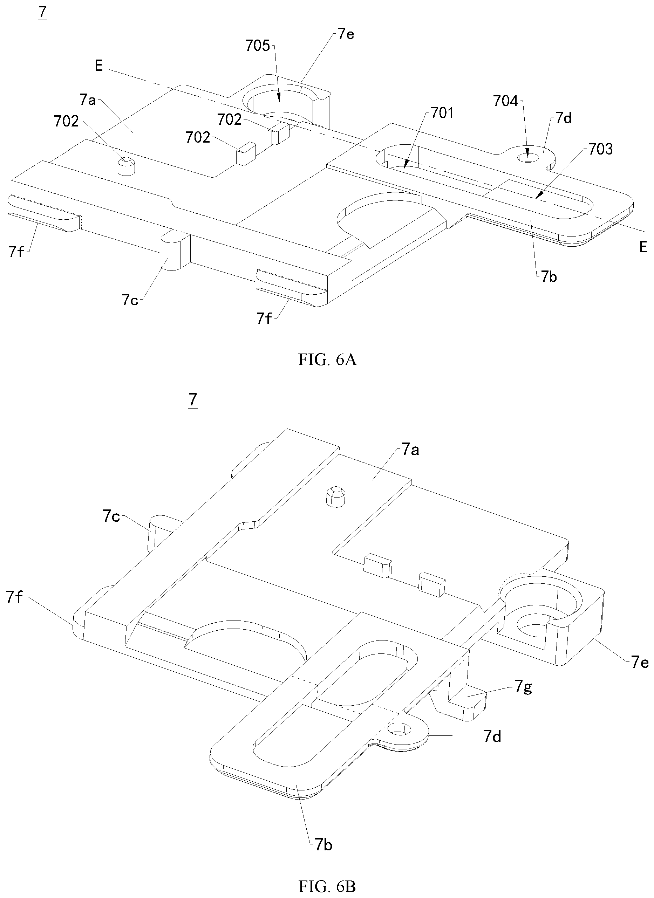

Refer to FIG. 6A and FIG. 6B. FIG. 6A is a diagram of a structure of the support 7 in the electronic device 100 shown in FIG. 1A in some embodiments. FIG. 6B is a diagram of a structure of the support 7 shown in FIG. 6A from another perspective.

In some embodiments, the support 7 may include a first portion 7a, a second portion 7b, a third portion 7c, a fourth portion 7d, a fifth portion 7e, a sixth portion 7f, and a seventh portion 7g. The first portion 7a of the support 7 is a main structure, and the second portion 7b, the third portion 7c, the fourth portion 7d, the fifth portion 7e, the sixth portion 7f, and the seventh portion 7g of the support 7 are all located at a side edge of the first portion 7a of the support 7.

It should be noted that, in FIG. 6A and FIG. 6B, division of the support 7 is illustrated by using dashed lines. It may be understood that, in some other embodiments, the plurality of portions of the support 7 may alternatively be divided in another manner. This is not limited herein.

For example, the first portion 7a of the support 7 may be provided with a first through hole 701.

For example, a plurality of support pillars 702 may be disposed on a surface of the first portion 7a of the support 7.

The plurality of support pillars 702 may be non-linearly arranged.

For example, the second portion 7b of the support 7 may be connected to a side of the first portion 7a of the support 7.

The second portion 7b of the support 7 may be provided with a first groove 703, and the first groove 703 communicates with the first through hole 701.

For example, the third portion 7c of the support 7 may be connected to a side of the first portion 7a of the support 7.

The third portion 7c of the support 7 and the second portion 7b of the support 7 may be connected to different sides of the first portion 7a of the support 7.

For example, the fourth portion 7d of the support 7 may be connected to a side of the second portion 7b of the support 7.

The fourth portion 7d of the support 7 may be provided with a first limiting hole 704.

For example, the fifth portion 7e of the support 7 may be connected to a side of the first portion 7a of the support 7.

The fifth portion 7e of the support 7, the third portion 7c of the support 7, and the second portion 7b of the support 7 may be separately connected to different sides of the first portion 7a of the support 7.

The fifth portion 7e of the support 7 may be provided with a second limiting hole 705.

For example, the sixth portion 7f of the support 7 may be connected to a side of the first portion 7a of the support 7.

The sixth portion 7f of the support 7 and the third portion 7c of the support 7 may be connected to a same side of the first portion 7a of the support 7.

There may be a plurality of sixth portions 7f of the support 7, and the plurality of sixth portions 7f of the support 7 may be located on two sides of the third portion 7c of the support 7.

In a thickness direction of the support 7, a top surface of the sixth portion 7f of the support 7 is lower than a top surface of the third portion 7c of the support 7. It should be noted that "top surface" and "low" are described with reference to a perspective shown in FIG. 6A.

For example, the seventh portion 7g of the support 7 may be connected to a side of the first portion 7a of the support 7.

The seventh portion 7g of the support 7 and the fifth portion 7e of the support 7 may be connected to a same side of the first portion 7a of the support 7.

The seventh portion 7g of the support 7 may be located between the second portion 7b of the support 7 and the fifth portion 7e of the support 7.

The seventh portion 7g of the support 7 and the sixth portion 7f of the support 7 may be located on two opposite sides of the first portion 7a of the support 7.

It should be noted that, in FIG. 6A and FIG. 6B, an example in which the support 7 includes seven portions is used for illustration. It may be understood that, in some other embodiments, the support 7 may include more partial structures, or may include fewer partial structures. This is not limited herein.

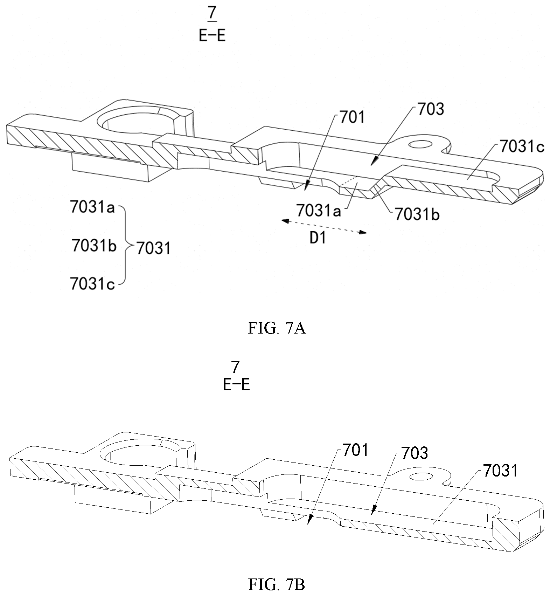

Refer to FIG. 7A and FIG. 7B. FIG. 7A is a diagram of a structure of the support 7 shown in FIG. 6A after the support 7 is cut along a line E-E in some embodiments. FIG. 7B is a diagram of a structure of the support 7 shown in FIG. 6A after the support 7 is cut along the line E-E in some other embodiments.

In some embodiments, an opening direction of the first groove 703 may be the same as an opening direction of the first through hole 701. The first groove 703 is provided with a first groove bottom wall 7031.

In some examples, the first groove bottom wall 7031 may be a step surface. Specifically, in a direction pointing from the first through hole 701 to the first groove 703 (namely, a direction D1 shown in FIG. 7A), the first groove bottom wall 7031 may include a first portion, a second portion, and a third portion that are sequentially connected. In the thickness direction of the support 7, the third portion 7031c of the first groove bottom wall 7031 may be higher than the first portion 7031a of the first groove bottom wall 7031, and the second portion 7031b of the first groove bottom wall 7031 may be oblique relative to the first portion 7031a of the first groove bottom wall 7031. It should be noted that "high" is described with reference to a perspective shown in FIG. 7A.

In some other examples, the first groove bottom wall 7031 may be a plane.

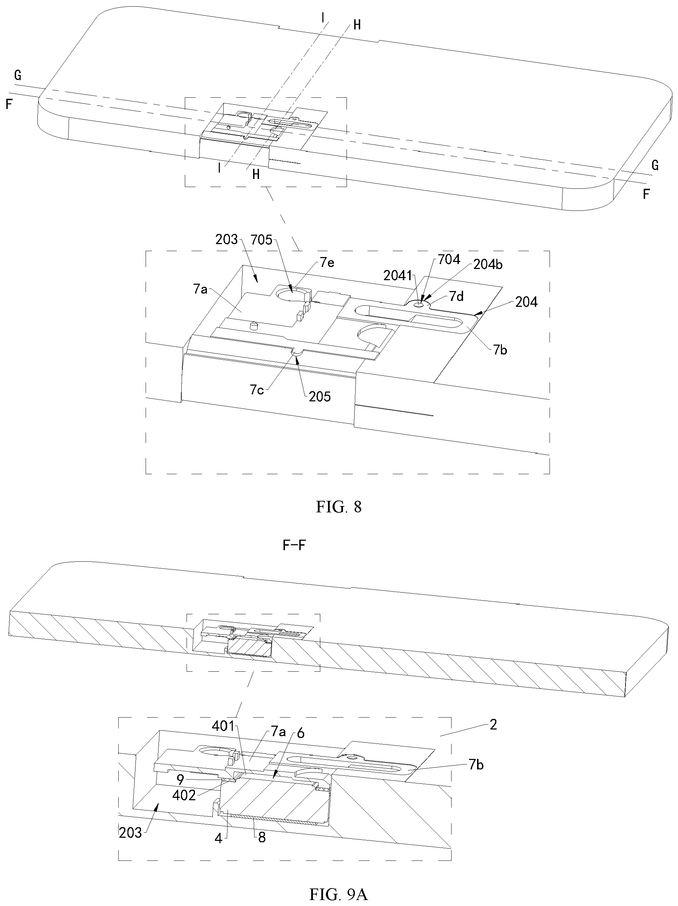

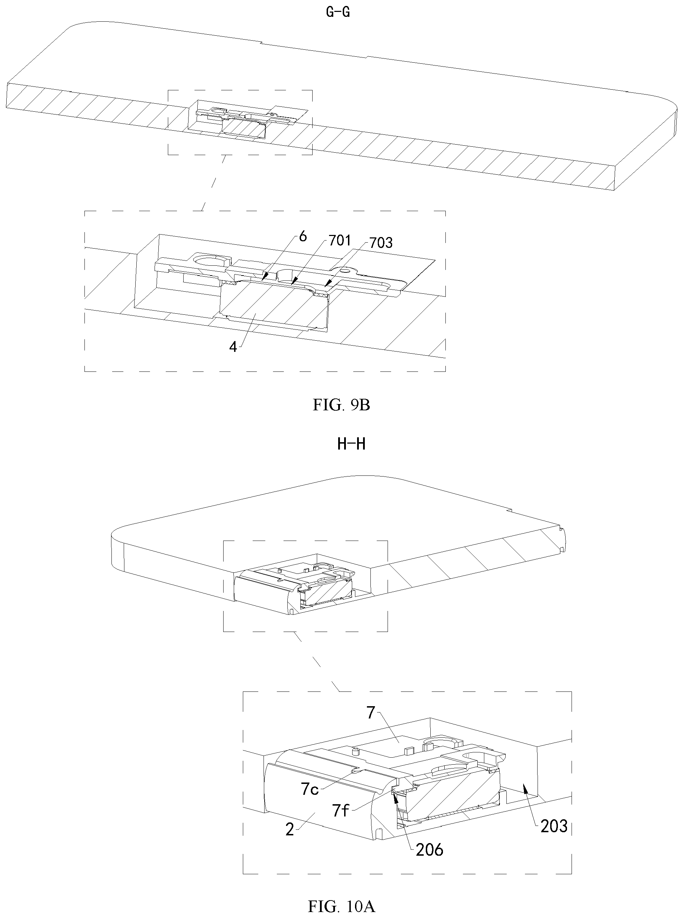

Refer to FIG. 8, FIG. 9A, and FIG. 9B. FIG. 8 is a diagram of a structure of a portion that is of the electronic device 100 shown in FIG. 4 and on which the support 7 shown in FIG. 7A is mounted in some embodiments. FIG. 9A is a diagram of a structure of the portion of the electronic device 100 shown in FIG. 8 after the portion is cut along a line F-F in some embodiments. FIG. 9B is a diagram of a structure of the portion of the electronic device 100 shown in FIG. 8 after the portion is cut along a line G-G in some embodiments.

In some embodiments, the first portion 7a of the support 7 may be at least partially located in the mounting groove 203, and the first portion 7a of the support 7 may be disposed around the periphery of the speaker 4, and form the front cavity 6 with the speaker 4 through enclosing. The first through hole 701 may communicate with the front cavity 6.

In this embodiment, the first portion 7a of the support 7 is disposed around the periphery of the speaker 4, so that sealing performance of the front cavity 6 enclosed by the support 7 and the speaker 4 can be improved, thereby improving the sound output effect of the speaker 4. The first through hole 701 communicates with the front cavity 6, so that the front cavity 6 can sequentially conduct the first through hole 701 and the first groove 703.

For example, the first portion 7a of the support 7 may be disposed around a periphery of the sound output surface 401, so that the sound output surface 401 can be completely exposed to the front cavity 6, to reduce a risk of blocking the sound output surface 401. This helps the speaker 4 better output the sound.

The first sealing ring 9 may be disposed on the mounting surface 402 of the speaker 4, and is located between the mounting surface 402 and the first portion 7a of the support 7.

In this embodiment, the first sealing ring 9 can improve performance of sealing between the first portion 7a of the support 7 and the mounting surface 402, to improve sealing performance of the sound cavity. This facilitates the sound output effect of the speaker 4. In addition, because the first sealing ring 9 may be in the compressed state, effect of sealing between the first portion 7a of the support 7 and the mounting surface 402 can be further improved. In addition, the first sealing ring 9 may be glue, to bond the first portion 7a of the support 7 to the mounting surface 402, so that stability of a connection between the mounting surface 402 and the first portion 7a of the support 7 is improved, to further improve the effect of sealing between the first portion 7a of the support 7 and the mounting surface 402.

In this embodiment, the support 7 may be fastened to the middle frame 2, and the support 7 is connected to the speaker 4 in a sealed manner through the first sealing ring 9. The speaker 4 can be connected to the groove bottom wall of the mounting groove 203 through the first mounting pad 8. In addition, the first sealing ring 9 and the first mounting pad 8 may be in the compressed state, that is, the first sealing ring 9 and the first mounting pad 8 may have deformation capabilities. Therefore, the deformation capabilities of the first sealing ring 9 and the first mounting pad 8 can be used to improve stability of fastening the speaker 4 to the groove bottom wall of the mounting groove 203 by the support 7, and further compensate for a dimension tolerance of the support 7 or the mounting groove 203, to avoid loose mounting of the speaker 4.

In some embodiments, the second portion 7b of the support 7 may extend outward from the mounting groove 203, and is fastened to the middle frame 2.

In this embodiment, the first portion 7a of the support 7 can be fastened to the middle frame 2 through the second portion 7b of the support 7, so that the enclosing of the front cavity 6 requires only the support 7 and the speaker 4, and is decoupled from another structure of the electronic device 100, to reduce a risk of interference caused by the another structure of the electronic device 100 to the front cavity 6. This helps improve the sound output effect of the electronic device 100.

For example, the second portion 7b of the support 7 may be mounted in the first fastening groove 204. Specifically, the second portion 7b of the support 7 may be mounted on the first portion 204a of the first fastening groove 204, so that an inner wall of the first portion 204a of the first fastening groove 204 can limit the second portion 7b of the support 7. Therefore, stability of mounting the support 7 on the middle frame 2 is improved.

In some embodiments, the third portion 7c of the support 7 may extend outward from the mounting groove 203, and is fastened to the middle frame 2.

In this embodiment, the first portion 7a of the support 7 can be fastened to the middle frame 2 through the third portion 7c of the support 7, so that the enclosing of the front cavity 6 requires only the support 7 and the speaker 4, and is decoupled from another structure of the electronic device 100, to reduce a risk of interference caused by the another structure of the electronic device 100 to the front cavity 6. This helps improve the sound output effect of the electronic device 100.

In this embodiment, the third portion 7c of the support 7 and the second portion 7b of the support 7 may be connected to different sides of the first portion 7a of the support 7, so that the third portion 7c of the support 7 and the second portion 7b of the support 7 can jointly fasten the first portion 7a of the support 7 in different directions. Therefore, stability of fastening the support 7 to the middle frame 2 is improved.

For example, the third portion 7c of the support 7 may be mounted in the second fastening groove 205, so that an inner wall of the second fastening groove 205 can limit the third portion 7c of the support 7. Therefore, stability of mounting the support 7 on the middle frame 2 is improved.

In some embodiments, the fourth portion 7d of the support 7 may be located outside the mounting groove 203, and is fastened to the middle frame 2.

In this embodiment, the fourth portion 7d of the support 7 can assist in fastening the second portion 7b of the support 7 to the middle frame 2, to further improve stability of mounting the support 7 on the middle frame 2.

For example, the fourth portion 7d of the support 7 may be mounted on the second portion 204b of the first fastening groove 204, so that an inner wall of the second portion 204b of the first fastening groove 204 can limit the fourth portion 7d of the support 7. Therefore, stability of mounting the support 7 on the middle frame 2 is improved.

The first limiting hole 704 of the fourth portion 7d of the support 7 may be sleeved on the limiting pillar 2041 located in the second portion 204b of the first fastening groove 204, so that the limiting pillar 2041 limits the first limiting hole 704. This improves effect of limiting the fourth portion 7d of the support 7 by the middle frame 2, and further improves stability of mounting the support 7 on the middle frame 2.

In some embodiments, the fifth portion 7e of the support 7 may be fastened to the middle frame 2 through a fastener (not shown in the figure).

In this embodiment, the fifth portion 7e of the support 7 is mounted on the middle frame 2 through the fastener, so that stability of the connection between the support 7 and the middle frame 2 can be further improved. In addition, the fastener can provide a pressing force for the support 7 in the thickness direction of the electronic device 100, to stably press the support 7 on the middle frame 2. In this way, stability of mounting between the support 7 and the middle frame 2 can be improved, and performance of sealing between the support 7 and the support 7 of the speaker 4 can be improved.

In this embodiment, the fifth portion 7e of the support 7, the third portion 7c of the support 7, and the second portion 7b of the support 7 may be separately connected to different sides of the first portion 7a of the support 7, so that the support 7 can be fastened to the support 7 in a plurality of directions, to form a stable trilateral connection structure, thereby improving stability of mounting the support 7 on the middle frame 2.

For example, the fastener may be mounted through the second limiting hole 705 of the fifth portion 7e of the support 7.

The fifth portion 7e of the support 7 may be located in the mounting groove 203, to make full use of internal space of the mounting groove 203, and reduce space additionally occupied by the fastener. This helps improve utilization of internal space of the electronic device 100.

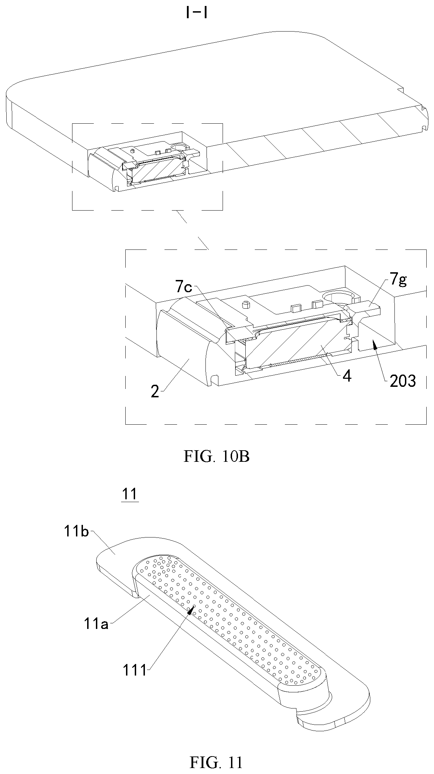

Refer to FIG. 10A and FIG. 10B. FIG. 10A is a diagram of a structure of the portion of the electronic device 100 shown in FIG. 8 after the portion is cut along a line H-H in some embodiments. FIG. 10B is a diagram of a structure of the portion of the electronic device 100 shown in FIG. 8 after the portion is cut along a line I-I in some embodiments.

In some embodiments, the sixth portion 7f of the support 7 may be mounted in the third fastening groove 206 located on the side wall of the mounting groove 203.

In this embodiment, the sixth portion 7f of the support 7 cooperates with the third fastening groove 206, so that the sixth portion 7f of the support 7 can be clamped to the middle frame 2, and the middle frame 2 limits the support 7 in the thickness direction of the electronic device 100, to improve stability of mounting the support 7 on the middle frame 2.

In this embodiment, the sixth portion 7f of the support 7 and the third portion 7c of the support 7 may be connected to a same side of the first portion 7a of the support 7, so that the sixth portion 7f of the support 7 can enhance stability of mounting the third portion 7c of the support 7 on the middle frame 2.

In this embodiment, there may be a plurality of sixth portions 7f of the support 7, and the sixth portions 7f of the plurality of supports 7 may be located on two sides of the third portion 7c of the support 7, so that mounting stability of the support 7 on the side on which the third portion 7c is located can be further improved.

In some embodiments, the seventh portion 7g of the support 7 may be clamped to a side that is of the speaker 4 and that faces away from the third fastening groove 206.

In this embodiment, the seventh portion 7g of the support 7 is clamped to the speaker 4, so that stability of a connection between the support 7 and the speaker 4 can be improved. This helps improve effect of sealing between the support 7 and the speaker 4, thereby improving sealing performance of the front cavity 6.

In this embodiment, the seventh portion 7g of the support 7 and the sixth portion 7f of the support 7 may be located on two opposite sides of the first portion 7a of the support 7, so that the seventh portion 7g of the support 7 limits the speaker 4 through clamping, and the sixth portion 7f of the support 7 and the third portion 7c of the support 7 limit the speaker 4 through the side wall of the mounting groove 203. In addition, the speaker 4 can be limited in opposite directions, so that stability of fastening the speaker 4 on the middle frame 2 by the support 7 is improved, and a loosening risk of the speaker 4 is reduced.

FIG. 11 is a diagram of a structure of the sound output mesh part 11 in the electronic device 100 shown in FIG. 1A in some embodiments.

In some embodiments, the sound output mesh part 11 may include a first portion 11a and a second portion 11b.

For example, the first portion 11a of the sound output mesh part 11 may be provided with a plurality of penetrating holes 111. In this embodiment, air permeability of the sound output mesh part 11 can be improved by using the plurality of penetrating holes 111, so that the sound can be transmitted through the plurality of penetrating holes 111.

It should be noted that, in FIG. 11, an example in which the penetrating hole 111 is a circular hole is used for illustration. It may be understood that a shape of the penetrating hole 111 may alternatively be another shape, for example, a triangle, a rectangle, a prism, an irregular shape, or a combination of a plurality of shapes. This is not limited herein.

For example, the second portion 11b of the sound output mesh part 11 may be connected to a periphery of the first portion 11a of the sound output mesh part 11, and extends in a circumferential direction of the first portion 11a of the sound output mesh part 11.

The second portion 11b of the sound output mesh part 11 may be connected to a portion of the periphery of the first portion 11a of the sound output mesh part 11. Specifically, the second portion 11b of the sound output mesh part 11 may not be disposed on a periphery of one side of the first portion 11a of the sound output mesh part 11.

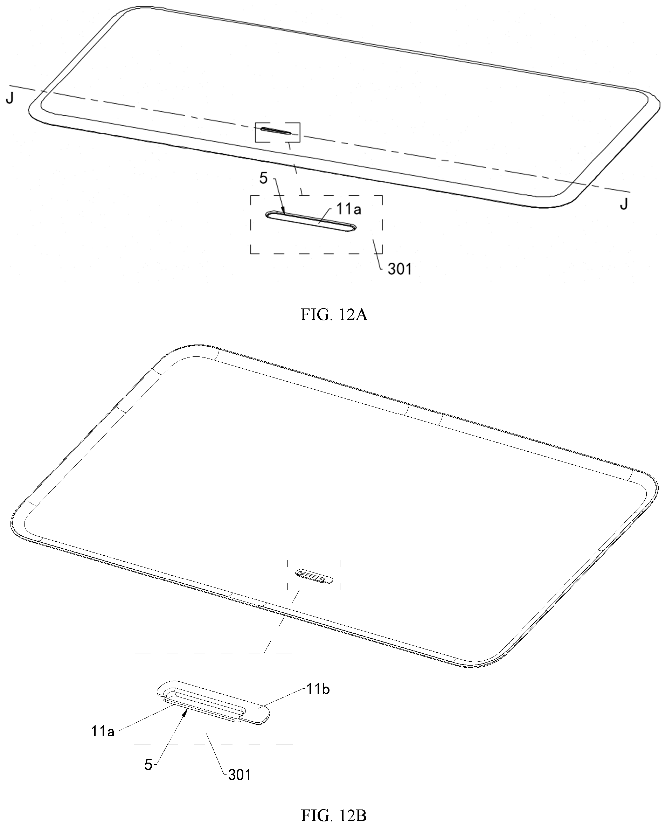

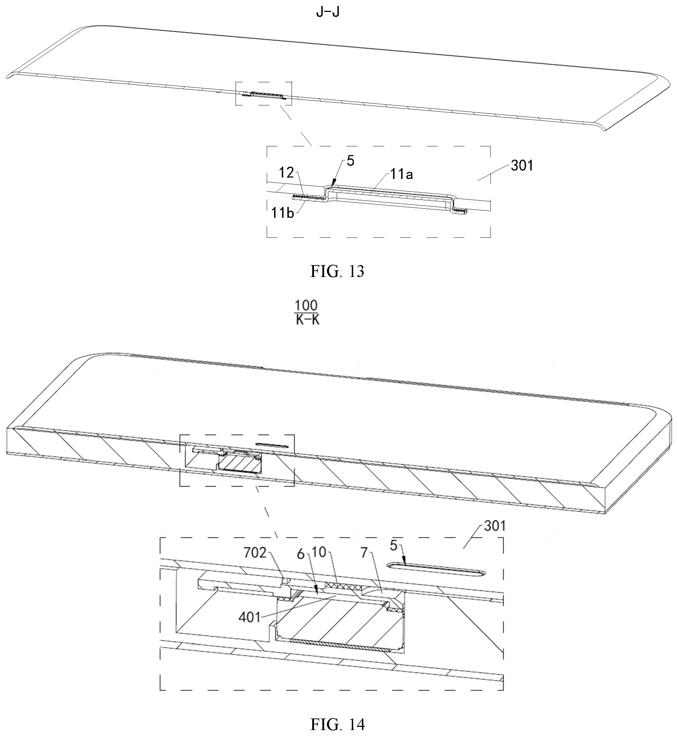

Refer to FIG. 12A to FIG. 13. FIG. 12A is a diagram of a structure in which the sound output mesh part 11 shown in FIG. 11 is mounted on the sound outlet 5 in some embodiments. FIG. 12B is a diagram of a structure of a portion of the electronic device 100 shown in FIG. 12A from another perspective. FIG. 13 is a diagram of a structure of the portion of the electronic device 100 shown in FIG. 12A after the portion is cut along a line J-J in some embodiments.

In some embodiments, the first portion 11a of the sound output mesh part 11 may be filled in the sound outlet 5, and the second portion 11b of the sound output mesh part 11 may be fastened to a surface of the battery cover 301.

In this embodiment, stability of mounting the first portion 11a of the sound output mesh part 11 on the sound outlet 5 can be improved by using the second portion 11b of the sound output mesh part 11, thereby improving stability of sound output at the sound outlet 5. In addition, because the first portion 11a of the sound output mesh part 11 is provided with the plurality of penetrating holes 111, airflow uniformity at the first portion 11a of the sound output mesh part 11 can be improved, thereby improving the sound output effect.

For example, the second mounting pad 12 is located between the second portion 11b of the sound output mesh part 11 and the battery cover 301.

In this embodiment, stability of mounting the second portion 11b of the sound output mesh part 11 on the battery cover 301 can be improved by using the second mounting pad 12, thereby improving stability of mounting the first portion 11a of the sound output mesh part 11 on the sound outlet 5.

Refer to FIG. 1B, FIG. 12B, and FIG. 14. FIG. 14 is a diagram of a structure of the electronic device 100 shown in FIG. 1A after the electronic device is cut along a line K-K in some embodiments.

In some embodiments, an opening of the first groove 703 of the support 7 may face the battery cover 301, and the first groove 703 may communicate with the first through hole 701 and the sound outlet 5.

In some embodiments, the penetrating holes 111 of the sound output mesh part 11 may communicate with the front cavity 6. Specifically, the penetrating holes 111 may communicate with the front cavity 6 sequentially through the first groove 703 and the first through hole 701, so that the sound output by the speaker 4 can sequentially pass through the front cavity 6, the first through hole 701, the first groove 703, and the penetrating holes 111.

In some embodiments, the second portion 11b of the sound output mesh part 11 may be connected to a periphery of a side that is of the first portion 11a of the sound output mesh part 11 and that is close to the front cavity 6. In addition, the second portion 11b of the sound output mesh part 11 is fastened to a surface that is of the rear cover assembly 3 and that is exposed to the front cavity 6. In this embodiment, the second portion 11b of the sound output mesh part 11 is disposed inside the electronic device 100. This helps improve aesthetic of the electronic device 100.

For example, a side that is of the first portion 11a of the sound output mesh part 11 and on which the second portion 11b of the sound output mesh part 11 is not disposed faces the first through hole 701.

In this embodiment, because a sound propagation direction is that the first through hole 701 faces the sound outlet 5, the second portion 11b of the sound output mesh part 11 is not disposed on the side that is of the first portion 11a of the sound output mesh part 11 and that faces the first through hole 701, so that gas flow resistance can be reduced. In this way, sound propagation interference is reduced, and the sound output effect is improved.

In some embodiments, the first sound output sealing ring 10 may be disposed between the support 7 and the battery cover 301. Specifically, the first sound output sealing ring 10 may be disposed around peripheries of the first through hole 701 and the first groove 703.

In this embodiment, the first sound output sealing ring 10 is disposed, so that performance of sealing between the support 7 and the battery cover 301 can be improved, thereby improving the sound output effect.

For example, the first sound output sealing ring 10 may be further disposed around a periphery of the sound output mesh part 11, to further improve sealing performance of a periphery of the sound outlet 5, and further improve the sound output effect.

In this embodiment, because the first sound output sealing ring 10 may be in the compressed state, performance of sealing between the battery cover 301 and the middle frame 2 is further improved.

In some embodiments, the support pillar 702 may abut against the battery cover 301, to support the battery cover 301. This reduces a risk of deformation of the battery cover 301, and helps reduce a risk of a change in a size of space between the sound outlet 5 and the first through hole 701, thereby improving the sound output effect.

Still refer to FIG. 1B and FIG. 14. In some embodiments (refer to FIG. 7A), the first portion 7031a of the first groove bottom wall 7031 and the third portion 7031c of the first groove bottom wall 7031 may be parallel to the sound output surface 401, and in the thickness direction of the support 7, the third portion 7031c of the first groove bottom wall 7031 may be higher than the first portion 7031a of the first groove bottom wall 7031, and the second portion 7031b of the first groove bottom wall 7031 may be oblique relative to the first portion 7031a of the first groove bottom wall 7031.

In this embodiment, the first groove bottom wall 7031 is designed, so that another internal structure of the electronic device 100 can be avoided, and internal space utilization of the electronic device 100 can be improved. In addition, an airflow guiding function can be implemented, so that a sound transmitted through the first through hole 701 can be better guided to the sound outlet 5, thereby optimizing the sound output effect.

In some other embodiments, the first groove bottom wall 7031 may be disposed parallel to the sound output surface 401, to help increase a cross-sectional area of a sound transmission path between the first through hole 701 and the sound outlet 5, so that a resonance frequency between the first through hole 701 and the sound outlet 5 can be better, to optimize the sound output effect.

In some embodiments, the sound outlet 5 may include a plurality of portions that are spaced from each other, and the plurality of portions of the sound outlet 5 all communicate with the front cavity 6, to change a sound output manner of the sound outlet 5, enrich the sound output manner of the electronic device 100, and meet different application scenarios.

In some embodiments, a ratio of an area of a portion that is of the sound output surface 401 and that is exposed to the front cavity 6 to a total area of the sound output surface 401 is greater than or equal to 3/4, to avoid excessive blocking of the sound output surface 401 in the enclosure structure of the front cavity 6. This helps the speaker 4 better output a sound toward the front cavity 6 through the sound output surface 401, thereby improving the sound output effect.

In some embodiments, in the thickness direction of the electronic device 100, the sound outlet 5 has an orthographic projection on a plane on which the sound output surface 401 is located, and at least a portion of the orthographic projection falls within a circular range with a radius of 30 mm from a center of the sound output surface 401.

In this embodiment, relative positions of the sound outlet 5 and the sound output surface 401 are designed, so that a distance between the sound outlet 5 and the sound output surface 401 is not excessively long, to shorten a sound output path. This helps improve the sound output effect.

It should be noted that the circular range with the radius of 30 mm from the center of the sound output surface 401 is a circular range whose circle center is the center of the sound output surface 401.

For example, at least a portion of the sound outlet 5 may be disposed directly facing the first through hole 701, to further shorten a length of a path between the front cavity 6 and the sound outlet 5. This helps optimize the sound output effect. It should be noted that direct facing means that, in the thickness direction of the electronic device 100, an orthographic projection of the sound outlet 5 on the support 7 can at least partially overlap the first through hole 701.

In some embodiments, when the speaker 4 operates, a resonance frequency in the front cavity 6 may be greater than or equal to 2.5 kHz, to implement better sound output effect. For example, the resonance frequency in the front cavity 6 may be but is not limited to 2.5 kHz, 2.6 kHz, 2.7 kHz, 2.8 kHz, 2.9 kHz, or another value greater than 2.5 kHz.

For example, in the thickness direction of the electronic device 100, a height of the front cavity 6 may range from 0.5 mm to 1 mm, so that the front cavity 6 can have a better resonance frequency, to implement better sound output effect. For example, the height of the front cavity 6 may be but is not limited to 0.5 mm, 0.6 mm, 0.7 mm, 0.8 mm, 0.9 mm, 1 mm, or another value between 0.5 mm and 1 mm.

In some embodiments, when the speaker 4 operates, a resonance frequency at the sound outlet 5 may be greater than or equal to 2.5 kHz, to implement better sound output effect. For example, the resonance frequency at the sound outlet 5 may be but is not limited to 2.5 kHz, 2.6 kHz, 2.7 kHz, 2.8 kHz, 2.9 kHz, or another value greater than 2.5 kHz.

For example, a sound output area of the sound outlet 5 may be greater than or equal to 9 mm², so that the sound outlet 5 can have a better resonance frequency, to implement better sound output effect. For example, the sound output area of the sound outlet 5 may be but is not limited to 9 mm², 9.1 mm², 9.2 mm², 9.3 mm², 9.4 mm², 9.5 mm², or another value greater than 9 mm².

It should be noted that, when the sound outlet 5 is a plurality of portions that are spaced from each other, the sound output area of the sound outlet 5 is a sum of areas of the plurality of portions. When the sound output mesh part 11 is mounted at the sound outlet 5, the sound output area of the sound outlet 5 is a sum of areas of the penetrating holes 111 on the sound output mesh part 11.

The following describes an assembly procedure of the electronic device 100 in some embodiments.

In some embodiments, the assembly procedure of the electronic device 100 may include step 1, step 2, step 3, and step 4.

Step 1: Mount the speaker 4 in the mounting groove 203 of the middle frame 2 through the first mounting pad 8. For details, refer to FIG. 3A to FIG. 5B and descriptions of the corresponding embodiments.

Step 2: Mount the support 7 on the middle frame 2, and fasten the support 7 and the speaker 4. For details, refer to FIG. 6A to FIG. 10B and descriptions of the corresponding embodiments.

Step 3: Mount the sound output mesh part 11 on the sound outlet 5. For details, refer to FIG. 11 to FIG. 13 and descriptions of the corresponding embodiments.

Step 4: Mount the battery cover 301 on the middle frame 2. For details, refer to FIG. 1A to FIG. 14 and descriptions of the corresponding embodiments.

It should be noted that step 1, step 2, and step 3 are not performed in sequence, and may be performed simultaneously.

It should be noted that, in the foregoing embodiments, an example in which the sound outlet 5 is disposed on the battery cover 301 is used for illustration. It may be understood that when the sound outlet 5 is disposed at another position of the rear cover assembly 3 or is enclosed by the rear cover assembly 3 and the middle frame 2, a structure in which the support 7 is mounted on the middle frame 2 and encloses the front cavity 6 with the speaker 4 may be any one of the foregoing embodiments, and a channel between the front cavity 6 and the sound outlet 5 may be adaptively adjusted based on the foregoing embodiments.

Specifically, when the sound outlet 5 is enclosed by the edge of the battery cover 301 and the edge of the middle frame 2, the battery cover 301, the support 7, and the middle frame 2 jointly enclose the channel between the front cavity 6 and the sound outlet 5.

When the sound outlet 5 is enclosed by edges of the battery cover 301 and the lens decorative part 302, the battery cover 301, the lens decorative part 302, the support 7, and the middle frame 2 jointly enclose the channel between the front cavity 6 and the sound outlet 5.

When the sound outlet 5 is enclosed by the edge of the lens decorative part 302 and the edge of the lens glass 303, the battery cover 301, the lens decorative part 302, the lens glass 303, the support 7, and the middle frame 2 jointly enclose the channel between the front cavity 6 and the sound outlet 5.

When the sound outlet 5 is disposed on the lens glass 303, the battery cover 301, the lens decorative part 302, the lens glass 303, the support 7, and the middle frame 2 jointly enclose the channel between the front cavity 6 and the sound outlet 5.

The following describes an embodiment in which the support 7 is not disposed. First, an embodiment in which the sound outlet 5 is enclosed by the edge of the battery cover 301 and the edge of the middle frame 2 is described.

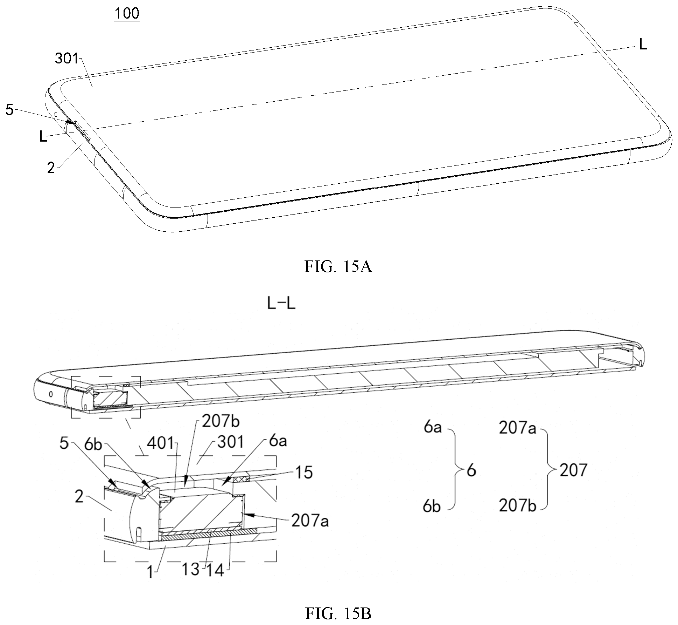

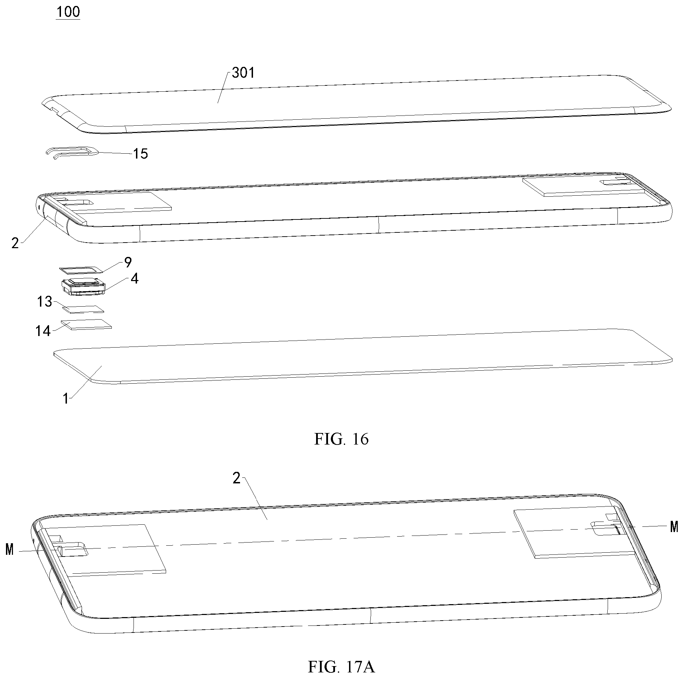

Refer to FIG. 15A, FIG. 15B, and FIG. 16. FIG. 15A is a diagram of a structure of the electronic device 100 in some other embodiments according to this application. FIG. 15B is a diagram of a structure of the electronic device 100 shown in FIG. 15A after the electronic device is cut along a line L-L in some embodiments. FIG. 16 is an exploded view of a partial structure of the electronic device 100 shown in FIG. 15A in some embodiments. It should be noted that the embodiments in FIG. 15A to FIG. 16 may include some features of the embodiments in FIG. 1A to FIG. 14, and same features are not described herein again.

In some embodiments, a mounting hole 207 may be disposed on the middle frame 2, and the mounting hole 207 may penetrate the middle frame 2 in the thickness direction of the electronic device 100. The battery cover 301 and the first screen 1 may cover two opposite sides of the mounting hole 207. The speaker 4 may be mounted in the mounting hole 207, and the battery cover 301, the speaker 4, and the middle frame 2 jointly enclose the front cavity 6.

In some embodiments, the electronic device 100 may further include a third mounting pad 13, a fourth mounting pad 14, and a second sealing ring 15.

For example, the third mounting pad 13 and the fourth mounting pad 14 are disposed between the speaker 4 and the first screen 1, to mount the speaker 4 on a surface that is of the first screen 1 and that faces the battery cover 301. The third mounting pad 13 is located between the fourth mounting pad 14 and the speaker 4.

The third mounting pad 13 and the fourth mounting pad 14 may be in a compressed state, to improve stability of mounting the speaker 4 on the first screen 1.

A material of the third mounting pad 13 may be but is not limited to adhesive, foam, foam adhesive, or the like, or the third mounting pad 13 may be formed by using a dispensing technique.

A material of the fourth mounting pad 14 may be but is not limited to adhesive, foam, foam adhesive, or the like, or the fourth mounting pad 14 may be formed by using a dispensing technique.

It should be noted that, in some other embodiments, the electronic device 100 may not include the fourth mounting pad 14, and the speaker 4 is directly connected to the first screen 1 through the third mounting pad 13.

For example, the second sealing ring 15 may be disposed between the middle frame 2 and the battery cover 301, to improve sealing performance of the front cavity 6. This helps improve the sound output effect.

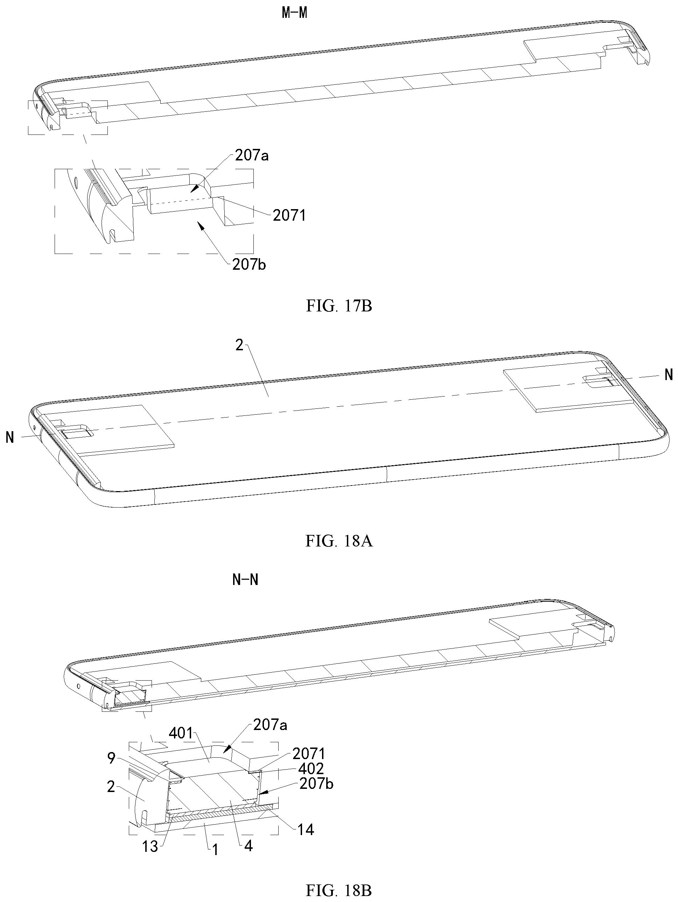

Refer to FIG. 17A and FIG. 17B. FIG. 17A is a diagram of a structure of the middle frame 2 in the electronic device 100 shown in FIG. 15A in some embodiments. FIG. 17B is a diagram of a structure of the middle frame 2 shown in FIG. 17A after the middle frame 2 is cut along a line M-M in some embodiments.

In some embodiments, the mounting hole 207 may include a first portion 207a and a second portion 207b. An inner diameter of the first portion 207a of the mounting hole 207 may be less than an inner diameter of the second portion 207b of the mounting hole 207. A limiting wall 2071 is formed at a position where the first portion 207a of the mounting hole 207 communicates with the second portion 207b of the mounting hole 207.

It should be noted that a dashed line in FIG. 17B is schematic division of the first portion 207a and the second portion of the mounting hole 207. It may be understood that, in some other embodiments, division of the first portion 207a and the second portion of the mounting hole 207 may alternatively be located at another position.

Refer to FIG. 18A and FIG. 18B. FIG. 18A is a diagram of a structure in which the speaker 4 is mounted on the middle frame 2 shown in FIG. 17A in some embodiments. FIG. 18B is a diagram of a structure of a portion of the electronic device 100 shown in FIG. 18A after the portion is cut along a line N-N in some embodiments.

In some embodiments, the first portion 207a of the mounting hole 207 is farther away from the first screen 1 than the second portion 207b of the mounting hole 207. The limiting wall 2071 may face the first screen 1, a side that is of the speaker 4 and that is close to the sound output surface 401 may be mounted on the limiting wall 2071, and a side that is of the speaker 4 and that faces away from the sound output surface 401 may be mounted on the first screen 1.

In this embodiment, the limiting wall 2071 and the first screen 1 form mounting limitation on the speaker 4, to limit the speaker 4 in the thickness direction of the electronic device 100. This improves stability of mounting the speaker 4 on the middle frame 2, facilitates stable sound output of the speaker 4, and improves the sound output effect.

For example, the first sealing ring 9 may be disposed between the mounting surface 402 of the speaker 4 and the limiting wall 2071.

In this embodiment, sealing performance of the front cavity near the sound output surface 401 can be improved by using the first sealing ring 9, thereby improving sealing performance of the front cavity 6. This helps improve the sound output effect. In addition, the first sealing ring 9 may be in a compressed state, to improve stability of mounting the speaker 4 on the middle frame 2.

For example, a circumferential size of the fourth mounting pad 14 may be greater than a size of a side that is of the mounting hole 207 and that is close to the first screen 1, so that a portion that is of the fourth mounting pad 14 and that exceeds the mounting hole 207 can improve sealing performance at a position at which the mounting hole 207 is close to the first screen 1. In this way, air is prevented from intruding into the first screen 1 through the mounting hole 207, and a risk of air leakage in the front cavity 6 is reduced.

In this embodiment, sealing effect of the side that is of the mounting hole 207 and that is close to the first screen 1 can be enhanced by disposing the third mounting pad 13. In addition, the third mounting pad 13 cooperates with the fourth mounting pad 14, so that mounting stability of the speaker 4 can be improved.

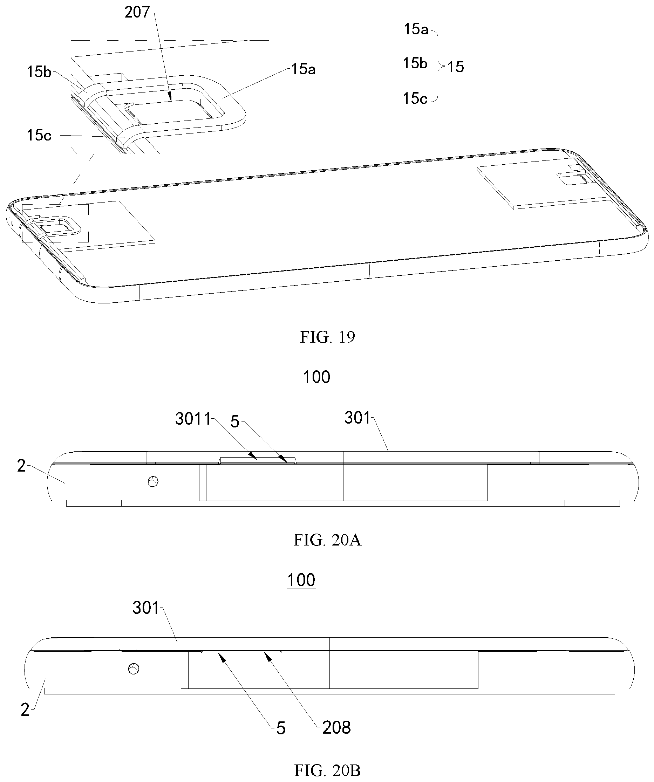

Refer to FIG. 15B and FIG. 19. FIG. 19 is a diagram of a structure in which the second sealing ring 15 is mounted on a portion of the electronic device 100 shown in FIG. 18A in some embodiments.

In some embodiments, the sound output surface 401, the inner wall of the first portion 207a of the mounting hole 207, and the rear cover assembly 3 may enclose the front cavity 6.

For example, the front cavity 6 may include a first portion 6a and a second portion 6b, and the second portion 6b of the front cavity 6 may be located between the first portion 6a of the front cavity 6 and the sound outlet 5. The battery cover 301, the sound output surface 401, and the inner wall of the first portion 207a of the mounting hole 207 may enclose the first portion 6a of the front cavity 6, and the battery cover 301 and a portion that is of the middle frame 2 and that is located between the sound outlet 5 and the mounting hole 207 enclose the second portion 6b of the front cavity 6.

In this embodiment, the mounting hole 207 of the middle frame 2 is designed, so that a large-size first portion 6a of the front cavity 6 can be enclosed, and the speaker 4 can have better sound output effect. The second portion 6b that is of the front cavity 6 and that is similar to a transmission pipe can be designed by using the design of enclosing the battery cover 301 and the middle frame 2, to facilitate sound transmission.

In this embodiment, the first sealing ring 9, the third mounting pad 13, and the fourth mounting pad 14 can provide sealing for the first portion 6a of the front cavity 6, and the second sealing ring 15 is located between the battery cover 301 and the middle frame 2, and can provide sealing for the second portion 6b of the front cavity 6. Therefore, overall sealing effect of the front cavity 6 is improved, to further improve the sound output effect of the speaker 4.

The second sealing ring 15 may include a first portion 15a, a second portion 15b, and a third portion 15c. The first portion 15a of the second sealing ring 15 may be of a U-shaped structure, the first portion 15a of the second sealing ring 15 may be disposed around a periphery of the mounting hole 207, and an opening of the U-shaped structure of the first portion 15a of the second sealing ring 15 may face the sound outlet 5. The second portion 15b of the second sealing ring 15 and the third portion 15c of the second sealing ring 15 may be respectively connected to two opposite ends of the first portion 15a of the second sealing ring 15, and extend in a direction toward the sound outlet 5 to abut against the edge of the battery cover 301 and the edge of the middle frame 2.

In this embodiment, enclosing of the first portion 15a of the second sealing ring 15 can prevent the sound from being propagated in a direction away from the sound outlet 5 after the sound is transmitted through the mounting hole 207. This helps guide the sound to the sound outlet 5 through enclosing. Enclosing of the second portion 15b and the third portion of the second sealing ring 15 can prevent the sound from being propagated to two sides of the sound outlet 5 along the edge of the battery cover 301 or the edge of the middle frame 2 before the sound is transmitted out of the sound outlet 5, thereby implementing sealing near the sound outlet 5. This helps improve the sound output effect of the electronic device 100.

It should be noted that dashed lines in FIG. 19 are schematic division of the first portion 15a, the second portion 15b, and the third portion 15c of the second sealing ring 15. It may be understood that the first portion 15a, the second portion 15b, and the third portion 15c of the second sealing ring 15 may alternatively be divided at other positions.

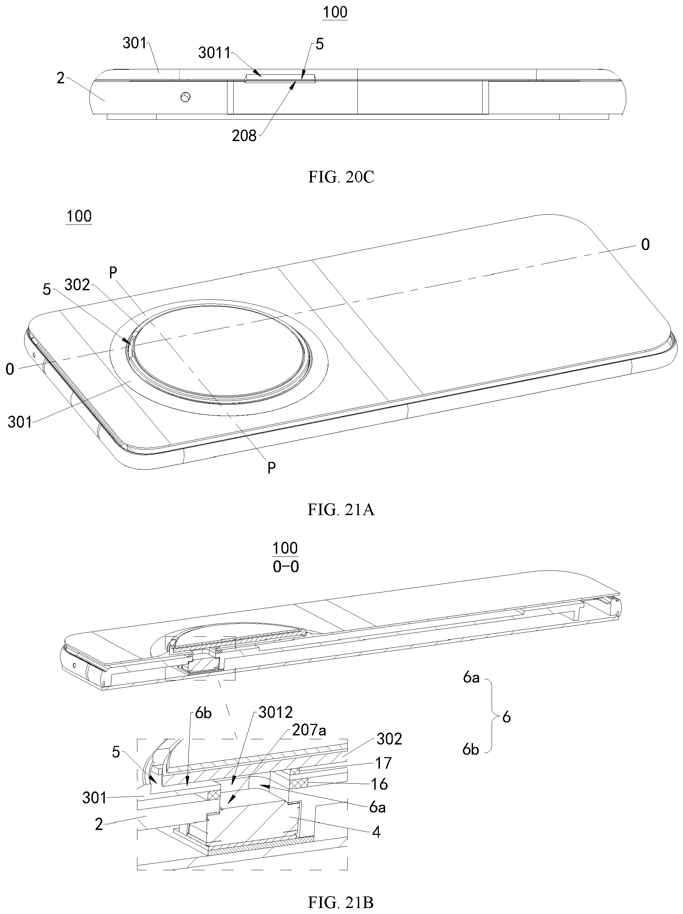

Refer to FIG. 20A to FIG. 20C. FIG. 20A is a diagram of a structure of the sound outlet 5 in the electronic device 100 shown in FIG. 15A in some embodiments. FIG. 20B is a diagram of a structure of the sound outlet 5 in the electronic device 100 shown in FIG. 15A in some other embodiments. FIG. 20C is a diagram of a structure of the sound outlet 5 in the electronic device 100 shown in FIG. 15A in some other embodiments.

In some embodiments, an extension direction of the sound outlet 5 may be consistent with an extension direction of the edge of the battery cover 301. This facilitates a narrowing design of the sound outlet 5, improves aesthetic of the electronic device 100, and further achieves dustproof effect.

In some examples, a first notch 3011 may be disposed at the edge of the battery cover 301, and the edge of the middle frame 2 encloses the first notch 3011 to form the sound outlet 5. This helps simplify a design of the sound outlet 5.

In some other examples, a second notch 208 may be disposed at the edge of the middle frame 2, and the edge of the battery cover 301 enclose the second notch 208 to form the sound outlet 5. This helps simplify a design of the sound outlet 5.

In some other examples, a first notch 3011 may be disposed at the edge of the battery cover 301, a second notch 208 may be disposed at the edge of the middle frame 2, and the first notch 3011 communicates with the second notch 208 to form the sound outlet 5. This helps enrich a design of the sound outlet 5. For example, the first notch 3011 may be partially aligned with the second notch 208.

The following describes an embodiment in which the battery cover 301 and the edge of the lens decorative part 302 enclose the sound outlet 5.

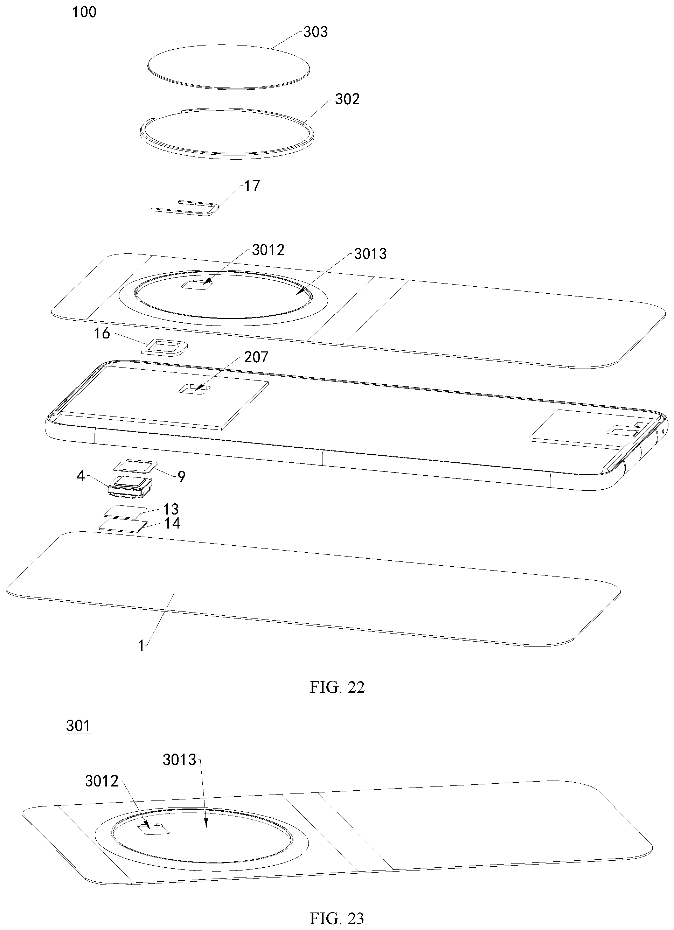

Refer to FIG. 21A to FIG. 22. FIG. 21A is a diagram of a structure of the electronic device 100 in some other embodiments according to this application. FIG. 21B is a diagram of a structure of the electronic device 100 shown in FIG. 21A after the electronic device is cut along a line O-O in some embodiments. FIG. 22 is an exploded view of a partial structure of the electronic device 100 shown in FIG. 21A in some embodiments. It should be noted that the electronic device 100 shown in FIG. 21A to FIG. 22 may include some features of the electronic device 100 shown in FIG. 1A to FIG. 20C, and same features are not described herein again.

In some embodiments, the battery cover 301 may be provided with a second through hole 3012, and the second through hole 3012 may communicate with the mounting hole 207 and the sound outlet 5. The lens decorative part 302, the battery cover 301, the middle frame 2, and the speaker 4 may jointly enclose the front cavity 6.

In some embodiments, the electronic device 100 may further include a second sound output sealing ring 16 and a third sealing ring 17.

For example, the second sound output sealing ring 16 may be disposed between the middle frame 2 and the battery cover 301, to improve performance of sealing between the middle frame 2 and the battery cover 301, thereby improving sealing performance of the front cavity 6.

Specifically, the second sound output sealing ring 16 may be disposed around a periphery of the second through hole 3012 and around a periphery of the mounting hole 207, to ensure sealing performance of the front cavity 6 at a position where the second through hole 3012 communicates with the mounting hole 207.

The second sound output sealing ring 16 may be in a compressed state, to improve stability of mounting the battery cover 301 on the middle frame 2.

A material of the second sound output sealing ring 16 may be but is not limited to adhesive, foam, foam adhesive, or the like, or the second sound output sealing ring 16 may be formed by using a dispensing technique.

For example, the third sealing ring 17 may be located between the battery cover 301 and the lens decorative part 302, to improve performance of sealing between the lens decorative part 302 and the battery cover 301, thereby improving sealing performance of the front cavity 6.

The third sealing ring 17 may be in a compressed state, to improve stability of mounting the lens decorative part 302 on the battery cover 301.

A material of the third sealing ring 17 may be but is not limited to adhesive, foam, foam adhesive, or the like, or the third sealing ring 17 may be formed by using a dispensing technique.

Refer to FIG. 21B and FIG. 23. FIG. 23 is a diagram of a structure of the battery cover 301 in the electronic device 100 shown in FIG. 21A in some embodiments.

In some embodiments, the battery cover 301 may be provided with a second groove 3013, and the second through hole 3012 may be disposed on a groove bottom wall of the second groove 3013. The second groove 3013 may accommodate at least a portion of the lens decorative part 302.

In this embodiment, the second groove 3013 is disposed on the battery cover 301, to provide mounting space for the lens decorative part 302, and facilitates enclosing of the front cavity 6.

For example, the lens decorative part 302 may be spaced from the groove bottom wall of the second groove 3013, and the lens decorative part 302 covers the second through hole 3012.

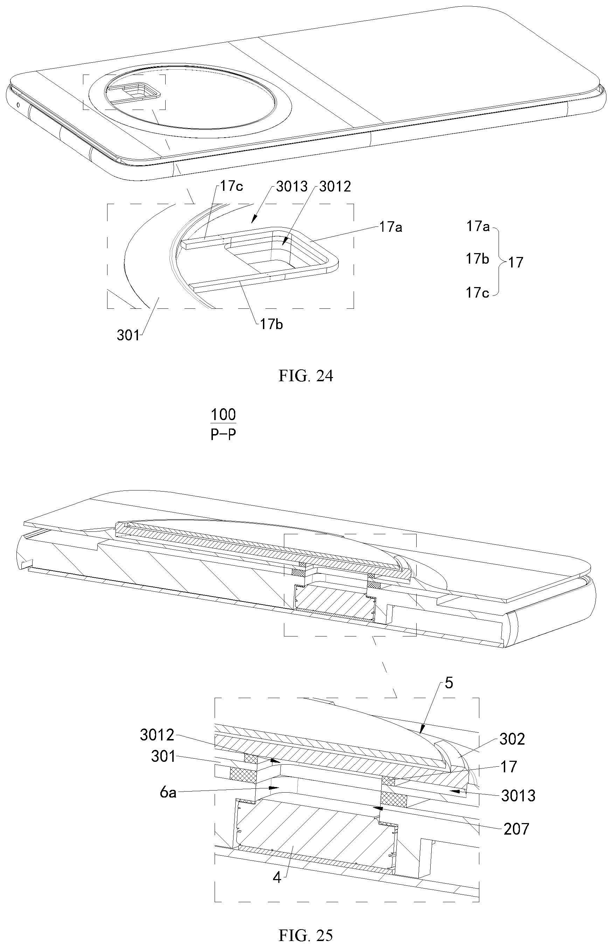

Refer to FIG. 21B, FIG. 24, and FIG. 25. FIG. 24 is a diagram of mounting the third sealing ring 17 in the electronic device 100 shown in FIG. 21A in some embodiments. FIG. 25 is a diagram of a structure of the electronic device 100 shown in FIG. 21A after the electronic device is cut along a line P-P in some embodiments.

In some embodiments, the front cavity 6 may include a first portion 6a and a second portion 6b. The second portion 6b of the front cavity 6 may be located between the first portion 6a of the front cavity 6 and the sound outlet 5. The lens decorative part 302, the inner wall of the second through hole 3012, the inner wall of the first portion 207a of the mounting hole 207, and the sound output surface 401 may enclose the first portion 6a of the front cavity 6, and the lens decorative part 302 and a portion that is of the groove bottom wall of the second groove 3013 and that is located between the sound outlet 5 and the second through hole 3012 may enclose the second portion 6b of the front cavity 6.

In this embodiment, the mounting hole 207 of the middle frame 2 and the second through hole 3012 of the battery cover 301 are designed, so that a large-size first portion 6a of the front cavity 6 can be enclosed, and the speaker 4 can have better sound output effect. The second portion 6b that is of the front cavity 6 and that is similar to a transmission pipe can be designed by using the design of enclosing the battery cover 301 and the lens decorative part 302, to facilitate sound transmission.

For example, the third sealing ring 17 may include a first portion 17a, a second portion 17b, and a third portion 17c. The first portion 17a of the third sealing ring 17 may be of a U-shaped structure, the first portion 17a of the third sealing ring 17 may be disposed around a periphery of the second through hole 3012, an opening of the U-shaped structure of the first portion 17a of the third sealing ring 17 faces the sound outlet 5, and the second portion 17b of the third sealing ring 17 and the third portion 17c of the third sealing ring 17 are respectively connected to two opposite ends of the first portion 17a of the third sealing ring 17, and extend in a direction toward the sound outlet 5 to abut against a side wall of the second groove 3013 and the edge of the lens decorative part 302.

In this embodiment, enclosing of the first portion 17a of the third sealing ring 17 can prevent the sound from being propagated in a direction away from the sound outlet 5 after the sound is transmitted through the second through hole 3012. This helps guide the sound to the sound outlet 5 through enclosing. Enclosing of the second portion 17b and the third portion 17c of the third sealing ring 17 can prevent the sound from being propagated to two sides of the sound outlet 5 along an edge of the second groove 3013 of the battery cover 301 or the edge of the lens decorative part 302 before the sound is transmitted out of the sound outlet 5, thereby implementing sealing near the sound outlet 5. This helps improve the sound output effect of the electronic device 100.

It should be noted that dashed lines in FIG. 24 are schematic division of the first portion 17a, the second portion 17b, and the third portion 17c of the third sealing ring 17. It may be understood that the first portion 17a, the second portion 17b, and the third portion 17c of the third sealing ring 17 may alternatively be divided at other positions.

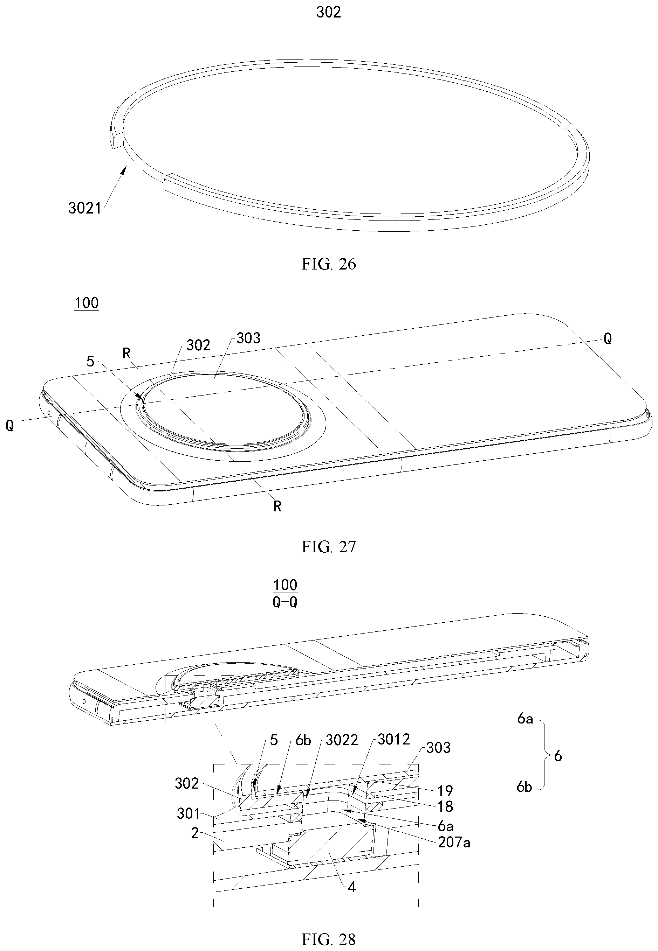

Refer to FIG. 21B and FIG. 26. FIG. 26 is a diagram of a structure of the lens decorative part 302 in the electronic device 100 shown in FIG. 21A in some embodiments.

In some embodiments, a third notch 3021 may be disposed at the edge of the lens decorative part 302, and the side wall of the second groove 3013 of the battery cover 301 encloses the third notch 3021 to form the sound outlet 5.

In this embodiment, the third notch 3021 is disposed at the edge of the lens decorative part 302, so that the sound outlet 5 can face the rear side of the electronic device 100. This helps optimize rear-side sound output effect of the electronic device 100.

It should be noted that, in some other embodiments, the sound outlet 5 enclosed by the lens decorative part 302 and the battery cover 301 may alternatively be in another form. For example, a notch may be provided on the side wall of the second groove 3013 of the battery cover 301, or notches may be provided on both the side wall of the second groove 3013 and the edge of the lens decorative part 302.

The following describes an embodiment in which the lens glass 303 and the edge of the lens decorative part 302 enclose the sound outlet 5.

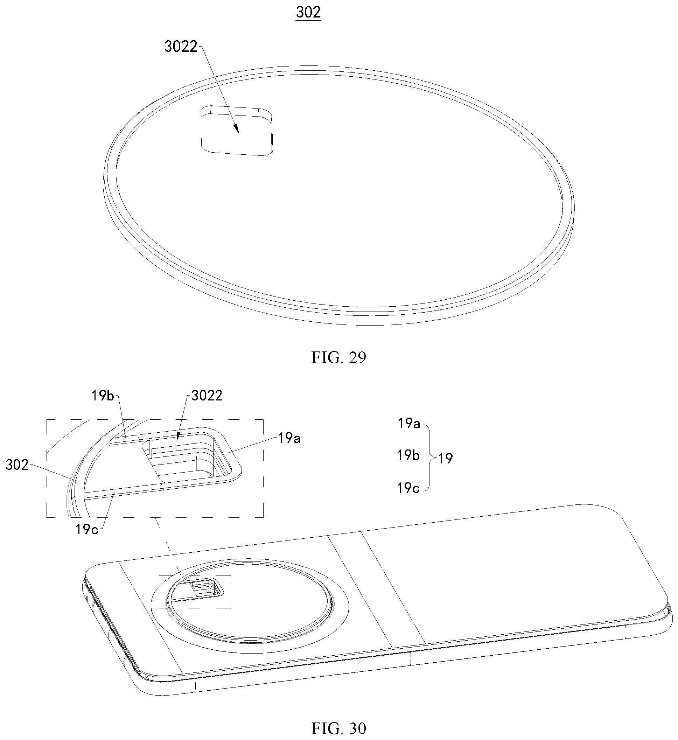

Refer to FIG. 27 to FIG. 29. FIG. 27 is a diagram of a structure of the electronic device 100 in some other embodiments according to this application. FIG. 28 is a diagram of a structure of the electronic device 100 shown in FIG. 27 after the electronic device is cut along a line Q-Q in some embodiments. FIG. 29 is a diagram of a structure of the lens decorative part 302 in the electronic device 100 shown in FIG. 27 in some implementations. It should be noted that the electronic device 100 shown in FIG. 27 may include some features of the electronic device 100 shown in FIG. 1A to FIG. 26, and same features are not described herein again.

In some embodiments, the lens decorative part 302 may be provided with a third through hole 3022, and the third through hole 3022 may communicate with the second through hole 3012 and the sound outlet 5. The lens glass 303 may cover the third through hole 3022, and the lens glass 303, the lens decorative part 302, the battery cover 301, the middle frame 2, and the speaker 4 may jointly enclose the front cavity 6.

In some embodiments, the electronic device 100 may further include a third sound output sealing ring 18 and a fourth sealing ring 19.

For example, the third sound output sealing ring 18 may be disposed between the battery cover 301 and the lens decorative part 302, to improve performance of sealing between the battery cover 301 and the lens decorative part 302, thereby improving sealing performance of the front cavity 6.

Specifically, the third sound output sealing ring 18 may be disposed around a periphery of the second through hole 3012 and around a periphery of the third through hole 3022, to ensure sealing performance of the front cavity 6 on the periphery of the second through hole 3012 and the periphery of the third through hole 3022.

The third sound output sealing ring 18 may be in a compressed state, to improve stability of mounting the lens decorative part 302 on the battery cover 301.

A material of the third sound output sealing ring 18 may be but is not limited to adhesive, foam, foam adhesive, or the like, or the third sound output sealing ring 18 may be formed by using a dispensing technique.

For example, the fourth sealing ring 19 may be located between the lens decorative part 302 and the lens glass 303, to improve performance of sealing between the lens glass 303 and the lens decorative part 302, thereby improving sealing performance of the front cavity 6.

The fourth sealing ring 19 may be in a compressed state, to improve stability of mounting the lens glass 303 on the lens decorative part 302.

A material of the fourth sealing ring 19 may be but is not limited to adhesive, foam, foam adhesive, or the like, or the fourth sealing ring 19 may be formed by using a dispensing technique.

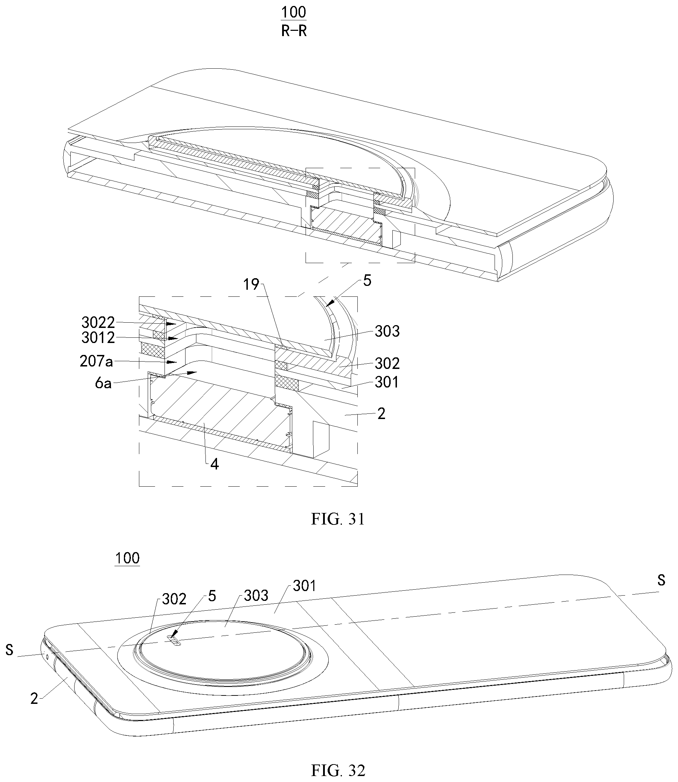

Refer to FIG. 28, FIG. 30, and FIG. 31. FIG. 30 is a diagram of mounting the fourth sealing ring 19 in the electronic device 100 shown in FIG. 27 in some embodiments. FIG. 31 is a diagram of a structure of the electronic device 100 shown in FIG. 27 after the electronic device is cut along a line R-R in some embodiments.

In some embodiments, the front cavity 6 may include a first portion 6a and a second portion 6b, and the second portion 6b of the front cavity 6 is located between the first portion 6a of the front cavity 6 and the sound outlet 5. The lens glass 303 may be spaced from the lens decorative part 302, and the lens glass 303 covers the third through hole 3022. The lens glass 303, an inner wall of the third through hole 3022, an inner wall of the second through hole 3012, the inner wall of the first portion 207a of the mounting hole 207, and the sound output surface 401 may enclose the first portion 6a of the front cavity 6, and the lens glass 303 and a portion that is of the lens decorative part 302 and that is located between the sound outlet 5 and the third through hole 3022 may enclose the second portion 6b of the front cavity 6.

In this embodiment, the mounting hole 207 of the middle frame 2, the second through hole 3012 of the battery cover 301, and the third through hole 3022 of the lens decorative part 302 are designed, so that a large-size first portion 6a of the front cavity 6 can be enclosed, and the speaker 4 can have better sound output effect. The second portion 6b that is of the front cavity 6 and that is similar to a transmission pipe can be designed by using the design of enclosing the lens glass 303 and the lens decorative part 302, to facilitate sound transmission.

For example, the fourth sealing ring 19 may include a first portion 19a, a second portion 19b, and a third portion 19c. The first portion 19a of the fourth sealing ring 19 may be of a U-shaped structure, the first portion 19a of the fourth sealing ring 19 may be disposed around a periphery of the third through hole 3022, an opening of the U-shaped structure of the first portion 19a of the fourth sealing ring 19 faces the sound outlet 5, and the second portion 19b of the fourth sealing ring 19 and the third portion 19c of the fourth sealing ring 19 are respectively connected to two opposite ends of the first portion 19a of the fourth sealing ring 19, and extend in a direction toward the sound outlet 5 to abut against the edge of the lens decorative part 302 and the edge of the lens glass 303.

In this embodiment, enclosing of the first portion 19a of the fourth sealing ring 19 can prevent the sound from being propagated in a direction away from the sound outlet 5 after the sound is transmitted through the third through hole 3022. This helps guide the sound to the sound outlet 5 through enclosing. Enclosing of the second portion 19b and the third portion 19c of the fourth sealing ring 19 can prevent the sound from being propagated to two sides of the sound outlet 5 along the edge of the lens decorative part 302 or the edge of the lens glass 303 before the sound is transmitted out of the sound outlet 5, thereby implementing sealing near the sound outlet 5. This helps improve the sound output effect of the electronic device 100.

It should be noted that dashed lines in FIG. 30 are schematic division of the first portion 19a, the second portion 19b, and the third portion 19c of the fourth sealing ring 19. It may be understood that the first portion 19a, the second portion 19b, and the third portion 19c of the fourth sealing ring 19 may alternatively be divided at other positions.

In some embodiments, the fourth sealing ring 19 and a spacing at which the lens glass 303 is spaced from the lens decorative part 302 may jointly enclose the sound outlet 5, or a notch may be disposed at the edge of the lens glass 303 and/or the edge of the lens decorative part 302, to enclose the sound outlet 5.

For example, the sound outlet 5 may include a plurality of portions that are spaced from each other along a periphery of the lens decorative part 302. The plurality of portions of the sound outlet 5 facilitate a beamforming design, thereby improving the sound output effect of the electronic device 100.

The following describes an embodiment in which the sound outlet 5 is disposed on the lens glass 303.

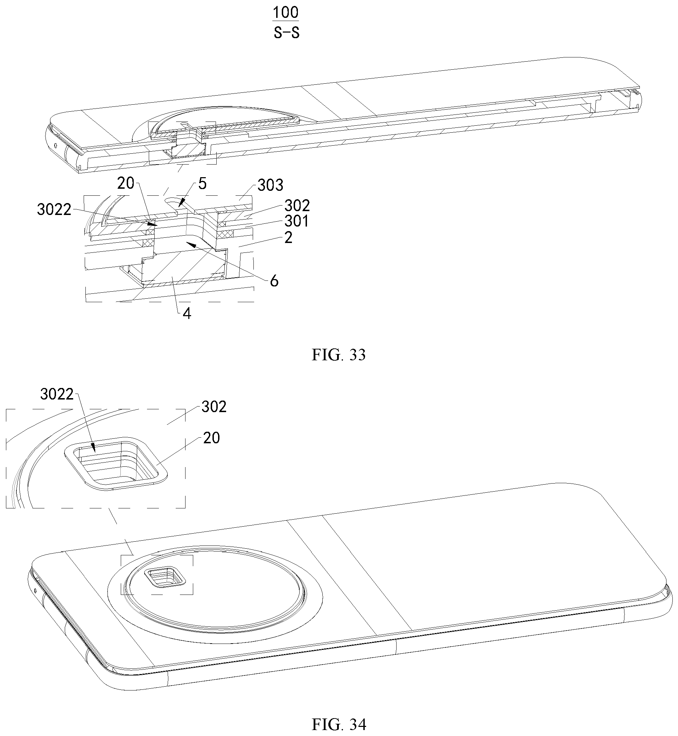

Refer to FIG. 32 to FIG. 34. FIG. 32 is a diagram of a structure of the electronic device 100 in some other embodiments according to this application. FIG. 33 is a diagram of a structure of the electronic device 100 shown in FIG. 32 after the electronic device is cut along a line S-S in some embodiments. FIG. 34 is a diagram of mounting a fourth sound output sealing ring 20 in the electronic device 100 shown in FIG. 32 in some embodiments. It should be noted that the electronic device 100 shown in FIG. 32 may include some features of the electronic device 100 shown in FIG. 1A to FIG. 31, and same features are not described herein again.

In some embodiments, the lens glass 303 may cover the third through hole 3022, and the lens glass 303, the lens decorative part 302, the battery cover 301, the middle frame 2, and the speaker 4 may jointly enclose the front cavity 6.

In some embodiments, the fourth sound output sealing ring 20 may be disposed between the lens glass 303 and the lens decorative part 302, to improve performance of sealing between the lens glass 303 and the lens decorative part 302, thereby improving sealing performance of the front cavity 6.

Specifically, the fourth sound output sealing ring 20 may be disposed around a periphery of the third through hole 3022, to ensure sealing performance of the front cavity 6 on the periphery of the third through hole 3022.

The fourth sound output sealing ring 20 may be in a compressed state, to improve stability of mounting the lens glass 303 on the lens decorative part 302.

A material of the fourth sound output sealing ring 20 may be but is not limited to adhesive, foam, foam adhesive, or the like, or the fourth sound output sealing ring 20 may be formed by using a dispensing technique.

In some embodiments, the lens glass 303 may be provided with the sound outlet 5, and at least a portion of the sound outlet 5 may be disposed directly facing the third through hole 3022.

In this embodiment, the lens glass 303, the lens decorative part 302, the battery cover 301, the middle frame 2, and the speaker 4 may jointly enclose a large-size front cavity 6. This is conducive to the sound output effect of the speaker 4. In addition, at least a portion of the sound outlet 5 is disposed directly facing the third through hole 3022. This helps improve the sound output effect of the electronic device 100.

The following describes another form design of the electronic device 100.

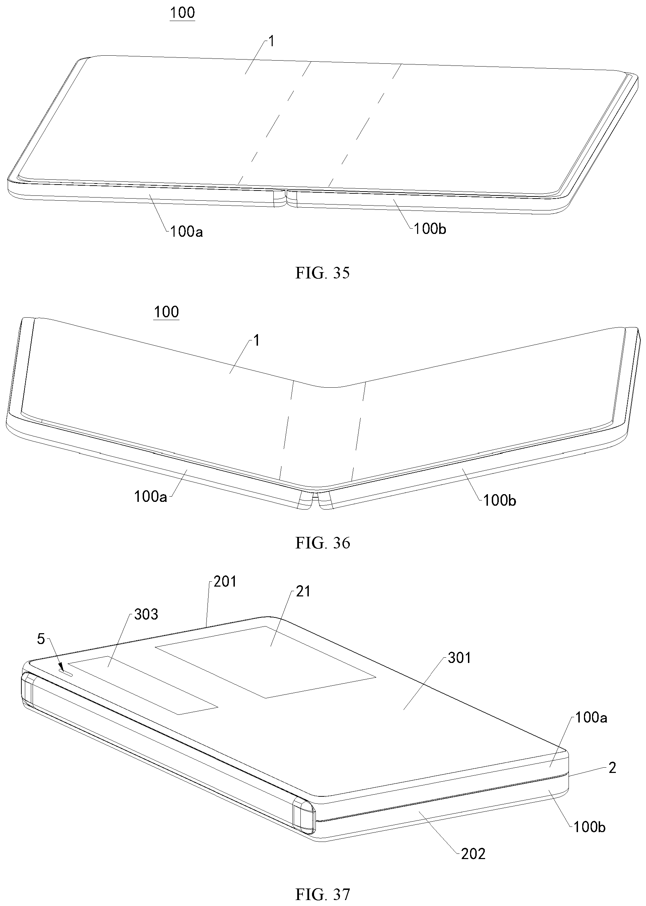

Refer to FIG. 35 to FIG. 37. FIG. 35 is a diagram of a structure of the electronic device 100 in some other embodiments according to this application. FIG. 36 is a diagram of a structure of the electronic device 100 shown in FIG. 35 in an intermediate state. FIG. 37 is a diagram of a structure of the electronic device 100 shown in FIG. 35 in a closed state. It should be noted that the electronic device 100 shown in FIG. 35 to FIG. 37 may include some features of the electronic device 100 shown in FIG. 1A to FIG. 34, and same features are not described herein again.

In some embodiments, the electronic device 100 is a foldable electronic device 100. As shown in FIG. 35, the electronic device 100 may be unfolded to an open state, to expose the first screen 1. As shown in FIG. 36, the electronic device 100 may alternatively be in the intermediate state between the open state and the closed state, so that opposite portions of the first screen 1 are bent toward each other. As shown in FIG. 37, the electronic device 100 may be further folded to the closed state, so that after the first screen 1 is folded, the rear cover assembly 3 is blocked.

In some embodiments, the electronic device 100 may include a first portion 100a and a second portion 100b. The first portion 100a of the electronic device 100 may rotate relative to the second portion 100b of the electronic device 100, to implement switching between the open state, the intermediate state, and the closed state of the electronic device 100.

It should be noted that the electronic device 100 shown in FIG. 35 to FIG. 37 may include the speaker, the support, the front cavity, and the sound outlet 5 in any one of the foregoing embodiments.

In the conventional technology, the electronic device 100 includes a conventional sound outlet (not shown in the figure). The conventional sound outlet may be disposed on a side of the first screen 1, or disposed on the top side surface 201 or the bottom side surface 202 of the middle frame 2. Therefore, when the electronic device 100 is in the closed state, the conventional sound outlet disposed on the side of the first screen 1 is blocked. In this case, the sound output effect of the electronic device 100 is interfered with. Although the conventional sound outlet disposed on the top side surface 201 or the bottom side surface 202 of the middle frame 2 is not blocked, sound output effect in top and bottom directions of the electronic device 100 are poor in some scenarios. For example, in a scenario in which the user holds the electronic device 100 and places the electronic device 100 near an ear to listen to a sound, the user usually makes the side on which the rear cover assembly 3 of the electronic device 100 is located face the ear. In this case, a sound output manner of the conventional sound outlet does not comply with a use habit of the user, and severely affects use experience.

In this embodiment, the sound outlet 5 is disposed on the rear cover assembly 3, or the sound outlet 5 is enclosed by the rear cover assembly 3 and the middle frame, so that the sound outlet 5 can be exposed when the electronic device 100 is in the closed state. In addition, an exposed position of the sound outlet 5 is close to the side on which the rear cover assembly 3 is located, so that sound output effect of the electronic device 100 on the side on which the rear cover assembly 3 is located can be optimized, and the electronic device 100 still has good sound output effect in the closed state, thereby improving user experience. For example, when answering an incoming call, the user does not need to open the electronic device 100 to the open state, and may directly answer the incoming call in the closed state, and same or similar sound listening experience as that in the open state can be implemented.

For example, the electronic device 100 may further include a second screen 21, and the second screen 21 may be mounted on a side that is of the battery cover 301 and that faces away from the first screen 1. When the electronic device 100 is in the closed state, the second screen 21 may be exposed, and the second screen 21 may be used when the electronic device 100 is in the closed state.

The sound outlet 5 may be exposed when the electronic device 100 is in the closed state, so that when the electronic device 100 is in the closed state, the sound outlet 5 can still output a sound, without being blocked by another structure. This helps improve sound output effect of the electronic device 100 in the closed state.

The sound outlet 5 may be located in the first portion 100a of the electronic device 100, and/or the sound outlet 5 may be located in the second portion 100b of the electronic device.

The second screen 21 may be located in the first portion 100a of the electronic device 100, and/or the second screen 21 may be located in the second portion 100b of the electronic device.

It should be noted that a relative position relationship between the sound outlet 5 and the second screen 21 is not limited. When the electronic device 100 is in the closed state, the sound outlet 5 and the second screen 21 may be located on a same side of the electronic device 100, or the sound outlet 5 and the second screen 21 are located on two opposite sides of the electronic device 100.

It should be noted that the electronic device 100 may further include the lens glass 303. The lens glass 303, the second screen 21, and the sound outlet 5 may be randomly arranged on the battery cover 301, provided that the sound outlet 5 can be exposed when the electronic device 100 is in the closed state.

It should be noted that, in some other embodiments, the electronic device 100 may alternatively not include the second screen 21, or the electronic device 100 may alternatively not include the lens glass 303.

It should be noted that the electronic device 100 may alternatively include a plurality of sound outlets 5. The plurality of sound outlets 5 may be designed in any manner in the foregoing embodiments, and the sound outlets 5 may have different design manners, to enrich the sound output manner of the electronic device 100, thereby improving the sound output effect of the electronic device 100.

It should be noted that the electronic device 100 may further include the conventional sound outlet (not shown in the figure). The conventional sound outlet may be disposed on a side of the first screen 1, or disposed on the top side surface 201 or the bottom side surface 202 of the middle frame 2. The conventional sound outlet cooperates with the sound outlet 5 provided in this embodiment of this application to output a sound, to enrich the sound output manner of the electronic device 100, thereby improving the sound output effect of the electronic device 100.

It should be noted that embodiments in this application and features in embodiments may be combined with each other without a conflict, and any combination of features in different embodiments also falls within the protection scope of this application. In other words, the foregoing described plurality of embodiments may be further combined based on an actual requirement.

It should be noted that all the foregoing accompanying drawings are example figures of this application, and do not represent actual sizes of products. In addition, a size proportion relationship between components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (100), comprising a first screen (1), a middle frame (2), a rear cover assembly (3), and a speaker (4), wherein
the first screen (1) and the rear cover assembly (3) are mounted on two opposite sides of the middle frame (2);
the speaker (4) is located between the first screen (1) and the rear cover assembly (3), the speaker (4) is mounted on the middle frame (2), and the speaker (4) and the rear cover assembly (3) enclose a front cavity (6);
the electronic device (100) is provided with a sound outlet (5), and the sound outlet (5) communicates with the front cavity (6); and
the sound outlet (5) is disposed on the rear cover assembly (3), or the rear cover assembly (3) and the middle frame (2) enclose the sound outlet (5).

2. The electronic device (100) according to claim 1, wherein the electronic device (100) further comprises a support (7), the support (7) is located between the speaker (4) and the rear cover assembly (3), the support (7) is mounted on the middle frame (2), and the support (7) and the speaker (4) enclose the front cavity (6); and
the support (7) is provided with a first through hole (701), one end of the first through hole (701) communicates with the front cavity (6), and the other end of the first through hole (701) communicates with the sound outlet (5).

3. The electronic device (100) according to claim 2, wherein the middle frame (2) is provided with a mounting groove (203), and the speaker (4) is accommodated in the mounting groove (203) and mounted on a groove bottom wall of the mounting groove (203);
the support (7) comprises a first portion (7a) and a second portion (7b);
the first portion (7a) of the support (7) is at least partially located in the mounting groove (203), the first portion (7a) of the support (7) is disposed around a periphery of the speaker (4), and forms the front cavity (6) with the speaker (4) through enclosing, and the first portion (7a) of the support (7) is provided with the first through hole (701); and
the second portion (7b) of the support (7) is connected to a side of the first portion (7a) of the support (7), and the second portion (7b) of the support (7) extends outward from the mounting groove (203) and is fastened to the middle frame (2).

4. The electronic device (100) according to claim 3, wherein the second portion (7b) of the support (7) is provided with a first groove (703), an opening of the first groove (703) faces the rear cover assembly (3), and the first groove (703) is located between the first through hole (701) and the sound outlet (5), and communicates the first through hole (701) to the sound outlet (5).

5. The electronic device (100) according to claim 4, wherein the first groove (703) is provided with a first groove bottom wall (7031), and the first groove bottom wall (7031) is a plane; or
the first groove bottom wall (7031) is a step surface; in a direction pointing from the first through hole (701) to the first groove (703), the first groove bottom wall (7031) comprises a first portion (7031a), a second portion (7031b), and a third portion (7031c) that are sequentially connected; and in a thickness direction of the electronic device (100), the third portion (7031c) of the first groove bottom wall (7031) is closer to the rear cover assembly (3) than the first portion (7031a) of the first groove bottom wall (7031), and the second portion (7031b) of the first groove bottom wall (7031) is oblique relative to the first portion (7031a) of the first groove bottom wall (7031).

6. The electronic device (100) according to any one of claims 3 to 5, wherein the support (7) further comprises a third portion (7c); and
the third portion (7c) of the support (7) and the second portion (7b) of the support (7) are connected to different sides of the first portion (7a) of the support (7), and the third portion (7c) of the support (7) extends outward from the mounting groove (203) and is fastened to the middle frame (2).

7. The electronic device (100) according to any one of claims 2 to 6, wherein the electronic device (100) further comprises a first sealing ring (9), the first sealing ring (9) is disposed between the speaker (4) and the support (7), and the first sealing ring (9) is disposed around the periphery of the speaker (4).

8. The electronic device (100) according to any one of claims 1 to 7, wherein the sound outlet (5) is disposed on the rear cover assembly (3); and
the rear cover assembly (3) comprises a battery cover (301), the battery cover (301) is mounted on a side that is of the middle frame (2) and that is away from the first screen (1), and the battery cover (301) is provided with the sound outlet (5); or
the rear cover assembly (3) comprises a battery cover (301) and a lens decorative part (302), the battery cover (301) is mounted on a side that is of the middle frame (2) and that is away from the first screen (1), the lens decorative part (302) is mounted on a side that is of the battery cover (301) and that is away from the first screen (1), and the battery cover (301) is provided with the sound outlet (5), or the lens decorative part (302) and the battery cover (301) enclose the sound outlet (5); or
the rear cover assembly (3) comprises a battery cover (301), a lens decorative part (302), and lens glass (303), the battery cover (301) is mounted on a side that is of the middle frame (2) and that is away from the first screen (1), the lens decorative part (302) is mounted on a side that is of the battery cover (301) and that is away from the first screen (1), the lens glass (303) is mounted on a side that is of the lens decorative part (302) and that is away from the first screen (1), and the battery cover (301) is provided with the sound outlet (5), or the lens decorative part (302) and the battery cover (301) enclose the sound outlet (5), or the lens glass (303) and the lens decorative part (302) enclose the sound outlet (5), or the lens glass (303) is provided with the sound outlet (5).

9. The electronic device (100) according to any one of claims 1 to 7, wherein the rear cover assembly (3) and the middle frame (2) enclose the sound outlet (5); and
the rear cover assembly (3) comprises a battery cover (301), the battery cover (301) is mounted on a side that is of the middle frame (2) and that is away from the first screen (1), and the battery cover (301) and the middle frame (2) enclose the sound outlet (5).

10. The electronic device (100) according to claim 9, wherein a first notch (3011) is disposed at an edge of the battery cover (301), and an edge of the middle frame (2) encloses the first notch (3011) to form the sound outlet (5); or
a second notch (208) is disposed at an edge of the middle frame (2), and an edge of the battery cover (301) encloses the second notch (208) to form the sound outlet (5); or
a first notch (3011) is disposed at an edge of the battery cover (301), a second notch (208) is disposed at an edge of the middle frame (2), and the first notch (3011) communicates with the second notch (208) to form the sound outlet (5).

11. The electronic device (100) according to claim 1, wherein the middle frame (2) is provided with a mounting hole (207), and the mounting hole (207) penetrates the middle frame (2) in a thickness direction of the electronic device (100);
the mounting hole (207) comprises a first portion (207a) and a second portion (207b), the first portion (207a) of the mounting hole (207) is closer to the rear cover assembly (3) than the second portion (207b) of the mounting hole (207), an inner diameter of the first portion (207a) of the mounting hole (207) is less than an inner diameter of the second portion (207b) of the mounting hole (207), and a limiting wall (2071) facing the first screen (1) is formed at a position where the first portion (207a) of the mounting hole (207) communicates with the second portion (207b) of the mounting hole (207);
one side of the speaker (4) abuts against the limiting wall (2071), and the other side that is of the speaker (4) and that is opposite abuts against a surface that is of the first screen (1) and that faces the rear cover assembly (3); and
the speaker (4), an inner wall of the first portion (207a) of the mounting hole (207), and the rear cover assembly (3) enclose the front cavity (6).

12. The electronic device (100) according to claim 11, wherein the rear cover assembly (3) and the middle frame (2) enclose the sound outlet (5);
the rear cover assembly (3) comprises a battery cover (301), the battery cover (301) is mounted on a side that is of the middle frame (2) and that is away from the first screen (1), and an edge of the battery cover (301) and an edge of the middle frame (2) enclose the sound outlet (5);
the front cavity (6) comprises a first portion (6a) and a second portion (6b), and the second portion (6b) of the front cavity (6) is located between the first portion (6a) of the front cavity (6) and the sound outlet (5); and
the battery cover (301), the speaker (4), and the inner wall of the first portion (207a) of the mounting hole (207) enclose the first portion (6a) of the front cavity (6), and the battery cover (301) and a portion that is of the middle frame (2) and that is located between the sound outlet (5) and the mounting hole (207) enclose the second portion (6b) of the front cavity (6).

13. The electronic device (100) according to claim 12, wherein the electronic device (100) further comprises a second sealing ring (15), and the second sealing ring (15) is mounted between the middle frame (2) and the battery cover (301); and
the second sealing ring (15) comprises a first portion (15a), a second portion (15b), and a third portion (15c), the first portion (15a) of the second sealing ring (15) is of a U-shaped structure, the first portion (15a) of the second sealing ring (15) is disposed around a periphery of the mounting hole (207), an opening of the U-shaped structure of the first portion (15a) of the second sealing ring (15) faces the sound outlet (5), and the second portion (15b) of the second sealing ring (15) and the third portion (15c) of the second sealing ring (15) are respectively connected to two opposite ends of the first portion (15a) of the second sealing ring (15), and extend in a direction toward the sound outlet (5) to abut against the edge of the battery cover (301) and the edge of the middle frame (2).

14. The electronic device (100) according to claim 11, wherein the sound outlet (5) is disposed on the rear cover assembly (3);
the rear cover assembly (3) comprises a battery cover (301), a lens decorative part (302), and lens glass (303); and
the battery cover (301) is mounted on a side that is of the middle frame (2) and that is away from the first screen (1), the lens decorative part (302) is mounted on a side that is of the battery cover (301) and that is away from the first screen (1), and the lens glass (303) is mounted on a side that is of the lens decorative part (302) and that is away from the first screen (1).

15. The electronic device (100) according to claim 14, wherein the battery cover (301) is provided with a second groove (3013), the second groove (3013) is configured to accommodate at least a portion of the lens decorative part (302), a groove bottom wall of the second groove (3013) is provided with a second through hole (3012), and the second through hole (3012) communicates with the mounting hole (207);
an edge of the lens decorative part (302) and a side wall of the second groove (3013) enclose the sound outlet (5);
the front cavity (6) comprises a first portion (6a) and a second portion (6b), and the second portion (6b) of the front cavity (6) is located between the first portion (6a) of the front cavity (6) and the sound outlet (5); and
the lens decorative part (302) is spaced from the groove bottom wall of the second groove (3013), the lens decorative part (302) covers the second through hole (3012), the lens decorative part (302), an inner wall of the second through hole (3012), the inner wall of the first portion (207a) of the mounting hole (207), and the speaker (4) enclose the first portion (6a) of the front cavity (6), and the lens decorative part (302) and a portion that is of the groove bottom wall of the second groove (3013) and that is located between the sound outlet (5) and the second through hole (3012) enclose the second portion (6b) of the front cavity (6).

16. The electronic device (100) according to claim 15, wherein the electronic device (100) further comprises a third sealing ring (17), and the third sealing ring (17) is mounted between the groove bottom wall of the second groove (3013) and the lens decorative part (302); and
the third sealing ring (17) comprises a first portion (17a), a second portion (17b), and a third portion (17c), the first portion (17a) of the third sealing ring (17) is of a U-shaped structure, the first portion (17a) of the third sealing ring (17) is disposed around a periphery of the second through hole (3012), an opening of the U-shaped structure of the first portion (17a) of the third sealing ring (17) faces the sound outlet (5), and the second portion (17b) of the third sealing ring (17) and the third portion (17c) of the third sealing ring (17) are respectively connected to two opposite ends of the first portion (17a) of the third sealing ring (17), and extend in a direction toward the sound outlet (5) to abut against a side wall of the second groove (3013) and an edge of the lens decorative part (302).

17. The electronic device (100) according to claim 14, wherein the battery cover (301) is provided with a second through hole (3012), and the second through hole (3012) communicates with the mounting hole (207);
the lens decorative part (302) covers the second through hole (3012), the lens decorative part (302) is provided with a third through hole (3022), and the third through hole (3022) communicates with the second through hole (3012);
an edge of the lens decorative part (302) and an edge of the lens glass (303) enclose the sound outlet (5);
the front cavity (6) comprises a first portion (6a) and a second portion (6b), and the second portion (6b) of the front cavity (6) is located between the first portion (6a) of the front cavity (6) and the sound outlet (5); and
the lens glass (303) is spaced from the lens decorative part (302), the lens glass (303) covers the third through hole (3022), the lens glass (303), an inner wall of the third through hole (3022), an inner wall of the second through hole (3012), the inner wall of the first portion (207a) of the mounting hole (207), and the speaker (4) enclose the first portion (6a) of the front cavity (6), and the lens glass (303) and a portion that is of the lens decorative part (302) and that is located between the sound outlet (5) and the third through hole (3022) enclose the second portion (6b) of the front cavity (6).

18. The electronic device (100) according to claim 17, wherein the electronic device (100) further comprises a fourth sealing ring (19), and the fourth sealing ring (19) is mounted between the lens decorative part (302) and the lens glass (303); and
the fourth sealing ring (19) comprises a first portion (19a), a second portion (19b), and a third portion (19c), the first portion (19a) of the fourth sealing ring (19) is of a U-shaped structure, the first portion (19a) of the fourth sealing ring (19) is disposed around a periphery of the third through hole (3022), an opening of the U-shaped structure of the first portion (19a) of the fourth sealing ring (19) faces the sound outlet (5), and the second portion (19b) of the fourth sealing ring (19) and the third portion (19c) of the fourth sealing ring (19) are respectively connected to two opposite ends of the first portion (19a) of the fourth sealing ring (19), and extend in a direction toward the sound outlet (5) to abut against the edge of the lens decorative part (302) and the edge of the lens glass (303).

19. The electronic device (100) according to claim 14, wherein the battery cover (301) is provided with a second through hole (3012), and the second through hole (3012) communicates with the mounting hole (207);
the lens decorative part (302) covers the second through hole (3012), the lens decorative part (302) is provided with a third through hole (3022), and the third through hole (3022) communicates with the second through hole (3012);
the lens glass (303) covers the third through hole (3022), the sound outlet (5) is disposed on the lens glass (303), and the sound outlet (5) communicates with the third through hole (3022); and
the lens glass (303), an inner wall of the third through hole (3022), an inner wall of the second through hole (3012), the inner wall of the first portion (207a) of the mounting hole (207), and the speaker (4) enclose the front cavity (6).

20. The electronic device (100) according to any one of claims 1 to 19, wherein the speaker (4) is provided with a sound output surface (401), and the sound output surface (401) is disposed facing the rear cover assembly (3).

21. The electronic device (100) according to claim 20, wherein a ratio of an area of a portion that is of the sound output surface (401) and that is exposed to the front cavity (6) to a total area of the sound output surface (401) is greater than or equal to 3/4.

22. The electronic device (100) according to claim 20 or 21, wherein in the thickness direction of the electronic device (100), the sound outlet (5) has an orthographic projection on a plane on which the sound output surface (401) is located, and at least a portion of the orthographic projection falls within a circle range with a center of the sound output surface (401) as a circle center and a radius of 30 mm.

23. The electronic device (100) according to any one of claims 1 to 22, wherein the electronic device (100) further comprises a sound output mesh part (11), the sound output mesh part (11) is mounted on the sound outlet (5), the sound output mesh part (11) is provided with a plurality of penetrating holes (111), and the penetrating holes (111) communicate with the front cavity (6).

24. The electronic device (100) according to claim 23, wherein the sound output mesh part (11) comprises a first portion (11a) and a second portion (11b);
the first portion (11a) of the sound output mesh part (11) is filled in the sound outlet (5), and the first portion (11a) of the sound output mesh part (11) is provided with the plurality of penetrating holes (111); and
the second portion (11b) of the sound output mesh part (11) is connected to a periphery of a side that is of the first portion (11a) of the sound output mesh part (11) and that is close to the front cavity (6), and extends in a circumferential direction of the first portion (11a) of the sound output mesh part (11), and the second portion (11b) of the sound output mesh part (11) is fastened to a surface that is of the rear cover assembly (3) and that is exposed to the front cavity (6).

25. The electronic device (100) according to any one of claims 1 to 24, wherein the sound outlet (5) comprises a plurality of portions that are spaced from each other, and the plurality of portions of the sound outlet (5) all communicate with the front cavity (6).

26. The electronic device (100) according to any one of claims 1 to 25, wherein the middle frame (2) is provided with a top side surface (201) and a bottom side surface (202) that are arranged in a length direction, and in the thickness direction of the electronic device (100), an orthographic projection of the sound outlet (5) on the middle frame (2) falls between the top side surface (201) and the bottom side surface (202).

27. The electronic device (100) according to any one of claims 1 to 26, wherein when the speaker (4) operates, a resonance frequency in the front cavity (6) is greater than or equal to 2.5 kHz; and/or
a resonance frequency at the sound outlet (5) is greater than or equal to 2.5 kHz.

28. The electronic device (100) according to claim 27, wherein a sound output area of the sound outlet (5) is greater than or equal to 9 mm²; and/or
in the thickness direction of the electronic device (100), a height of the front cavity (6) ranges from 0.5 mm to 1 mm.
